# EUROPEAN PATENT APPLICATION

(11) **EP 2 169 873 A1**
(43) Date of publication of application: **31.03.2010**
(21) Application number: 08764156.9
(22) Date of filing: 17.06.2008
(51) Int. Cl.: H04L 9/10, G06F 9/48, G09C 1/00

(54) **ENCRYPTION DEVICE AND ENCRYPTION OPERATION METHOD**

(30) Priority: 18.06.2007 JP 2007160630
(71) Applicant: Panasonic Corporation, Kadoma-shi Osaka 571-8501 (JP)
(72) Inventor: SENGA, Satoshi Panasonic Corp., IPROC, Shiromi, Chuo-ku, Osaka 540-6207 (JP); LIU, Hsueh-Teng c/o Panasonoc Corp., IPROC, Shiromi, Chuo-ku, Osaka 540-6207 (JP)
(74) Representative: Grünecker, Kinkeldey, Stockmair & Schwanhäusser Anwaltssozietät
(86) International application number: PCT/JP2008/001561
(87) International publication number: WO 2008/155905

(57) **Abstract**

Provided is an encryption device which can effectively use a hardware encryption engine and reduce a packet processing delay of a real time application. In this device, an approval unit (230) judges whether it is possible to use an HW cipher unit (264) corresponding to a secure application requested for encryption operation, i.e., whether an encryption resource is not used. A priority processing approval unit (240) calculates a priority of a cryptographic operation in the secure application of the request source. If the HW cipher unit (264) cannot be used, the priority of a secure application currently allocated to the HW cipher unit (264) is compared to that of the secure application requesting for the cryptographic operation. If the secure application of the request source has a higher priority, the currently allocated secure application is released from the HW cipher unit and the secure application of the request source is allocated to the HW cipher unit (264). The secure application which has been released is allocated to an SW cipher unit (266).

## Description

### Technical Field

The present invention relates to a cipher apparatus and cryptographic operation method for performing suitable processing in response to an encryption request or decryption request from a plurality of applications.

### Background Art

Up till now, studies are underway on portable terminals and systems in which, by mounting WLAN functions or Bluetooth functions allowing high-speed data communications in a narrow area on the portable terminals capable of communications in a wide area to complete communications, different communication functions are used depending on various uses of applications.

In line with the diversification of such communication techniques or applications, there is also a demand for assuring security while maintaining speed enhancement of packet transmission in a network, and the speed enhancement of networks is underway concurrently with standardization of network security standards including IPSEC.

Along with this trend, there is also a growing demand for speed enhancement of a cipher apparatus that encrypts packets on a network.

Therefore, in order to meet the demand for speed enhancement even in small terminals with low CPU processing capacity represented by portable terminals, cipher apparatuses are present which are capable of making encryption and decryption faster than software processing by making the encryption and decryption function execute on the hardware board.

For example, such cipher apparatuses employ a small configuration when they are incorporated in portable terminals, and, consequently, are likely to limit cryptographic resources for which cryptographic operations are performed.

In such cipher apparatuses, when a plurality of applications having various characteristics such as different bandwidths are performed at substantially the same time, these applications are processed in order of the arrival of decryption processing requests. Here, until the cipher engine finishes decryption processing with respect to one application, other applications cannot be processed. By this means, problems may arise in processing of a plurality of applications requested at substantially the same time.

On the other hand, for example, Patent Document 1 discloses, in encrypting sections in a plurality of encryption accelerators, performing encryption processing with time limits for secure applications for which a secure application encryption request (i.e., cipher request) is admitted.

According to this Patent Document 1, in response to encryption requests from various applications, the use time of each application, which is a cryptographic resource for a cipher engine, is limited. By this means, it is possible to prevent one application from occupying the cipher engine such that a plurality of applications are executed.
Patent Document 1: U.S. Patent Application Laid-Open No.20050276413

### Disclosure of Invention

### Problem to be Solved by the Invention

However, Patent Document 1 discloses providing time limits in order of the arrival of encryption requests from a plurality of applications and performing encryption processing by a cipher engine. By this means, if there are packets of a secure application requiring real-time performance such as VoIP (Voice over Internet Protocol) and AVoIP (Audio Visual over Internet Protocol) at the same time, the application and an application not requiring real-time performance such as Web browsing are processed equally.

Therefore, there is a problem that an increase of transmission delay is caused and efficient processing cannot be performed for a secure application that requires real-time performance and fast processing (hereinafter "real-time application" for ease of explanation).

According to this conventional technique, although cipher engine resources used by applications are controlled by time limits, it is not possible to perform efficient cryptographic operations for packets requiring real-time performance and demanding a severe processing time.

It is therefore an object of the present invention to provide a cipher apparatus and cryptographic operation method for reducing packet processing delay in a real-time application using a hardware cipher engine efficiently.

### Means for Solving the Problem

The cipher apparatus of the present invention having a hardware module and software module for performing a cryptographic operation for a secure application that is allocated, employs a configuration having: a determining section that determines an availability of the hardware module for a secure application that requests the cryptographic operation; a priority calculating section that calculates a priority of the cryptographic operation for the secure application that requests the cryptographic operation; a comparing section that, if the availability of the hardware module is not admitted, compares priorities between the secure application requesting the cryptographic operation and another secure application that is different from the secure application that requests the cryptographic operation and that is allocated to the hardware module; and an allocating section that, when a priority level of the secure application that requests the cryptographic operation is higher, releases the another secure application from the hardware module, allocates the secure application that requests the cryptographic operation to the hardware module, and allocates the released another secure application to the software module.

The cryptographic operation method of the present invention for performing a cryptographic operation by allocating a hardware module and software module to a secure application that requests the cryptographic operation, employs a configuration having: a determining step of determining an availability of the hardware module for a secure application that requests the cryptographic operation; a priority calculating step of calculating a priority of a cryptographic operation for the secure application that requests the cryptographic operation; a comparing step of, when the availability of the hardware module is not admitted, comparing priorities between the secure application that requests the cryptographic operation and another secure application from the secure application that requests the cryptographic operation and that is allocated to the hardware module; and an allocating step of, when a priority level of the secure application that requests the cryptographic operation is higher, releasing the another secure application from the hardware module, allocating the secure application that requests the cryptographic operation to the hardware module, and allocating the another secure application released to the software module.

### Advantageous Effect of the Invention

According to the present invention, it is possible to reduce packet processing delay of a secure application requiring real-time performance using a hardware cipher engine efficiently.

### Brief Description of Drawings

FIG.1 illustrates a communication system including a mobile communication terminal having a cipher apparatus according to the present invention;
FIG.2 is a block diagram showing the configuration of a mobile terminal according to the present invention;
FIG.3 illustrates policy DB;
FIG.4 illustrates usage DB;
FIG.5 is a flowchart illustrating packet processing when a portable terminal having a cipher apparatus according to the present invention performs transmission and reception;
FIG.5A is a flowchart of packet processing when a portable terminal performs transmission;
FIG.5B is a flowchart of packet processing when a portable terminal performs reception;
FIG.6 is a flowchart illustrating preemptive admission control for allocating cipher resources in a mobile terminal according to the present invention;
FIG.7 is a flowchart of preemptive admission control about cipher resource allocation when a secure application serviced by an HW cipher engine, which is an HW cipher unit, terminates;
FIG.8 is a sequence diagram showing secure AVoIP transmission processing with an HW cipher in a portable terminal having a cipher apparatus according to the present invention;
FIG.9 is a sequence diagram showing secure Web transmission processing by SW cipher and HW cipher in a portable terminal having a cipher apparatus according to the present invention;
FIG.10 is a sequence diagram showing secure VoIP transmission processing by SW cipher in a portable terminal having a cipher apparatus according to the present invention;
FIG.11 is a sequence diagram showing secure VoIP transmission processing by HW cipher in a portable terminal having a cipher apparatus according to the present invention;
FIG.12 illustrates a policy DB snapshot and snapshot of the usage DB used in Embodiments;
FIG.12A illustrates a policy DB snapshot;
FIG.12B illustrates a usage DB snapshot;
FIG.13 illustrates an outline of processing in a portable terminal having a cipher apparatus according to Embodiment 1 of the present invention;
FIG.14 is a sequence diagram showing processing in a portable terminal having a cipher apparatus according to Embodiment 1 of the present invention;
FIG.15 is a sequence diagram showing processing in a portable terminal having a cipher apparatus according to Embodiment 1 of the present invention;
FIG.16 is a sequence diagram showing processing in a portable terminal having a cipher apparatus according to Embodiment 1 of the present invention;
FIG.17 is a sequence diagram showing processing in a portable terminal having a cipher apparatus according to Embodiment 1 of the present invention;
FIG.18 is a sequence diagram showing processing in a portable terminal having a cipher apparatus according to Embodiment 1 of the present invention;
FIG.19 illustrates an outline of processing in a portable terminal having a cipher apparatus according to Embodiment 2 of the present invention;
FIG.20 is a sequence diagram showing processing in a portable terminal having a cipher apparatus according to Embodiment 2 of the present invention;
FIG.21 is a sequence diagram showing processing in a portable terminal having a cipher apparatus according to Embodiment 2 of the present invention;
FIG.22 is a sequence diagram showing processing in a portable terminal having a cipher apparatus according to Embodiment 2 of the present invention;
FIG.23 is a sequence diagram showing processing in a portable terminal having a cipher apparatus according to Embodiment 2 of the present invention;
FIG.24 illustrates an outline of processing in a portable terminal having a cipher apparatus according to Embodiment 3 of the present invention;
FIG.25 is a sequence diagram showing processing in a portable terminal having a cipher apparatus according to Embodiment 3 of the present invention;
FIG.26 is a sequence diagram showing processing in a portable terminal having a cipher apparatus according to Embodiment 3 of the present invention;
FIG.27 is a sequence diagram showing processing in a portable terminal having a cipher apparatus according to Embodiment 3 of the present invention;
FIG.28 is a sequence diagram showing processing in a portable terminal having a cipher apparatus according to Embodiment 3 of the present invention;
FIG.29 illustrates an outline of processing in a portable terminal having a cipher apparatus according to Embodiment 4 of the present invention;
FIG.30 is a sequence diagram showing processing in a portable terminal having a cipher apparatus according to Embodiment 4 of the present invention;
FIG.31 is a sequence diagram showing processing in a portable terminal having a cipher apparatus according to Embodiment 4 of the present invention;
FIG.32 is a sequence diagram showing processing in a portable terminal having a cipher apparatus according to Embodiment 4 of the present invention;
FIG.33 is a sequence diagram showing processing in a portable terminal having a cipher apparatus according to Embodiment 4 of the present invention; and
FIG.34 is a sequence diagram showing processing in a portable terminal having a cipher apparatus according to Embodiment 4 of the present invention.

### Best Mode for Carrying Out the Invention

Embodiments of the present invention will be explained below in detail with reference to the accompanying drawings.

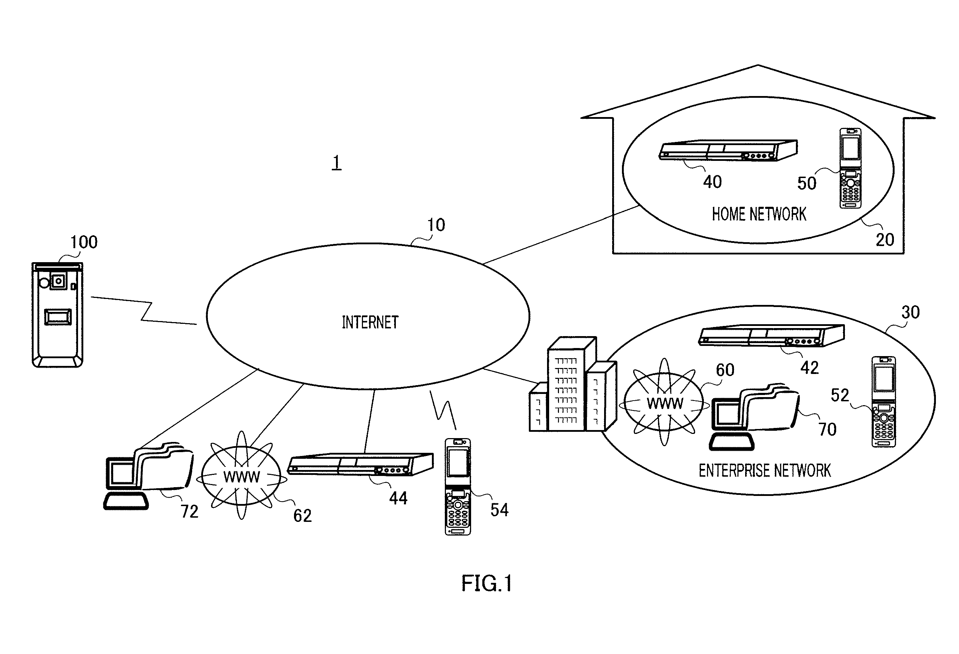

FIG.1 illustrates a communication system including a mobile communication terminal having the decryption apparatus according to the present invention. First, communication system 1 having portable terminal 100 will be explained.

In communication system 1, portable terminal 100 is connected to home network 20, enterprise network 30, media server 44, other mobile communication terminal 54, Web server 62 and file transfer server 72 via Internet 10.

In this communication system 1, mobile terminal 100 having an IP network stack is connected to Internet 10 to execute various network applications such as AVoIP (Audio/Video stream over IP), VoIP (Voice over IP), Web browsing (Web access) and file transfer service (Ftp).

These network applications are provided by home network 20, enterprise network 30 and network apparatuses connected to Internet 10, via Internet 10.

Home network 20 is comprised of, for example, a local network such as a home LAN, and formed with media server 40 and mobile communication terminal 50 that can communicate with this media server 40. This home network 20 is connected to Internet 10, so that mobile terminal 50 can make a VoIP call to mobile terminal 100, and media server 40 can provide AVoIP applications to mobile terminal 100. For example, in this communication system 1, mobile terminal 100 can watch video with sound recorded in media server 40.

Enterprise network 30 is comprised of, for example, a local area network such as an enterprise LAN, and, here, formed with media server 42, mobile terminal 52, Web server 60 and file transfer server 70.

By this means, on enterprise network 30, media server 42 can provide AVoIP applications to mobile terminal 100 and mobile apparatus 52 can make a VoIP call to mobile terminal 100. Further, Web server 60 can allow Web access to mobile terminal 100 and file transfer server 70 can provide remote file access to mobile terminal 100.

On Internet 10, media server 44 can provide AVoIP applications to mobile terminal 100, and mobile apparatus 54 can perform a VoIP call to mobile terminal 100. Further, Web server 62 can provide Web access to mobile terminal 100, and file server 72 can provide remote file access for mobile terminal 100.

In this communication system 1, for example, mobile terminal 100 is utilized in business, and, when apparatuses in the networks provide applications, Web access and remote file access to mobile terminal 100 and make a VoIP call to mobile terminal 100, the VoIP call is made in a secure application requiring encryption processing and encryption processing, which are collectively referred to as encryption and decryption processing (also referred to as "cryptographic operations"). Further, for ease of explanation, an application may be referred to as an "appli" below. For example, a secure application may be referred to as a "secure appli."

Mobile terminal 100 according to an embodiment of the present invention performs preemptive admission and dynamically reallocates cipher resources to a plurality of secure applications, based on the priority, and performs cryptographic operations by a hardware cipher engine and software cipher module. By this means, it is possible to use a plurality of secure applications in this mobile terminal 100.

Here, mobile terminal 100 will be explained.

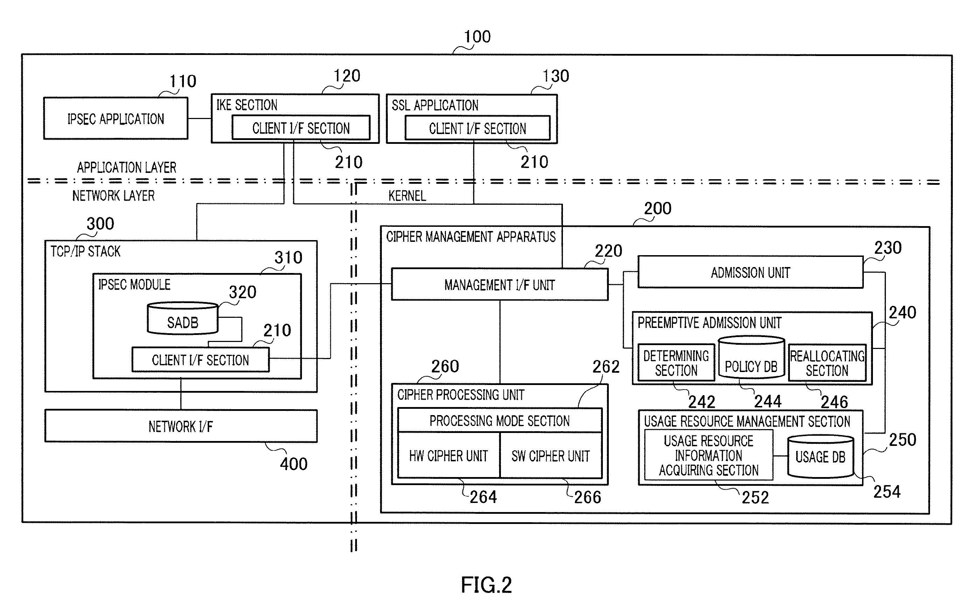

FIG.2 is a block diagram showing the configuration of the mobile terminal according to the present invention.

Mobile terminal (handset) 100 shown in FIG.2 is provided with IPsec application 110, IKE (Internet Key Exchange) section 120, SSL (Secure Socket Layer) application 130, cipher management apparatus 200, TCP/IP stack 300 and network interface section (network I/F) 400.

In mobile terminal 100, IPsec application 110, IKE section 120 and SSL application 130 function in the application layer, and cipher management apparatus 200 functions as a kernel. Further, TCP/IP stack 300 and network I/F 400 function in the network layer. In mobile terminal 100 in FIG.2, components that function in a kernel, the application layer and the network layer, are illustrated as components that function in a kernel, the application layer and the network layer.

IPsec application 110 is a secure application that functions on IPsec, and provides a security in the network layer by Internet security protocol (IPsec protocol) to protect application communications.

Here, IPsec application 110 includes secure AVoIP, which is a secure application using AVoIP, secure VoIP, which is a secure application using VoIP, and an Ftp application. Further, for example, VoIP and AVoIP are applications requiring real-time performance (also referred to as "real-time applications").

IPsec application 110 negotiates a security association (SA) to make IPsec for secure communication available using IKE section 120 and establishes the SA.

That is, before starting communication, using IKE section 120, IPsec application 110 determines an encryption scheme, exchanges cipher keys, performs mutual authentication, exchanges and shares information about the encryption method and the cipher keys, and establishes a secure communication path (i.e., SA).

IKE section 120 negotiates and authenticates key information about a security association by a secured method, and has client interface unit (client I/F section) 210.

Client I/F section 210 is an interface to cipher management apparatus 200 for the cipher resource request admission control and preemptive admission control in the cipher engine.

SSL application 130 is an application that functions on the SSL (Secure Socket Layer), and provides a security in the application layer using the SSL to protect communication of the application.

Here, SSL application 130 includes a Web access application (secure Web).

SSL application 130 has client I/F section 210, which is an interface to cipher management apparatus 200 for cipher resource request admission control and preemptive admission control.

TCP/IP stack 300 provides Internet connectivity for mobile terminal 100 via network I/F 400.

Further, TCP/IP stack 300 has IPsec module 310 that performs IPsec secure communication via network I/F 400.

IPsec module 310 has security association database (SADB) 320 that is used to record SA entry for existing IPsec secure communications.

IPsec module 310 inputs and outputs information for allocation and reallocation of cipher resources, to cipher management apparatus 200 via client I/F section 210.

Network I/F 400 provides physical network connectivity for external apparatuses.

Cipher management apparatus 200 performs an interface for secure applications, admission control, preemptive admission control, allocation of cipher resources, release of cipher resources, cipher resource usage management and cryptographic operations of cipher and hash.

Cipher management apparatus 200 is provided with management interface unit (hereinafter "management I/F unit") 220, admission unit 230, preemptive admission unit 240, usage resource management section 250 and cipher processing unit 260.

Management I/F unit 220 connects IKE section 120, SSL application 130 and client I/F section 210 in TCP/IP stack 300 to units 230, 240 and 260 in cipher management apparatus 200.

To be more specific, in cipher management apparatus 200, this management I/F unit 220 functions as an interface for a cryptographic operation request for encryption and decryption processing from secure applications, and functions as a interface to the responding secure application.

Admission unit 230 is used to admit (allow) a secure application request if the amount of available cipher resources in the system satisfies the amount of cipher resources the secure application requires.

To be more specific, admission unit 230 receives a request for secure application cryptographic operations from the secure application via management I/F unit 220. Further, admission unit 230 decides whether the received request is accepted, based on information about the usage state in cipher processing unit 260 managed by usage resource management section 250. To be more specific, admission unit 230 sets allowance or non-allowance of cryptographic operations for the source secure application that requests cryptographic operations, based on the availability state of cipher resources in HW cipher unit 264, which is an HW cipher engine in cipher processing unit 260.

Thus, upon receiving as input a cryptographic operation request for a secure application via management I/F unit 220, admission unit 230 checks the usage state in hardware cipher unit (hardware cipher engine) 264 based on information from usage resource management section 250. If hardware cipher unit 264 is not used, admission unit 230 admits an acceptance of the cryptographic operation request for the secure application and allocates cipher resources in hardware cipher unit (hereinafter "HW cipher unit") 264 to the requesting secure application. Further, a signal with its indication is outputted to cipher processing unit 260 via management I/F unit 220.

Preemptive admission unit 240 performs preemptive admission control of cryptographic operations (i.e., encryption and decryption) for a secure application, and sets the HW cipher engine (i.e., HW cipher unit 264) or the software (SW) cipher module (i.e., SW cipher unit 266) to be utilized, based on the priority level of the secure application and the amount of channels the secure application requires upon cryptographic operations.

Further, using each application policy set, preemptive admission unit 240 allocates cipher resources in HW cipher unit 264 or software cipher unit (i.e., SW cipher unit) 266 for performing cryptographic operations, to the secure application that requests cryptographic operations.

To be more specific, preemptive admission unit 240 is provided with determining section 242, policy database 244 and re-allocating section (hereinafter "reallocating section") 246.

Based on the setting of application policies in policy database 244 and the usage state in the cipher processing unit by the secure application that is currently admitted, that is, information about available cipher resources in HW cipher unit 264 in usage resource management section 250, determining section 242 performs preemptive admission control.

To be more specific, using policy DB 244, determining section 242 compares and selects the priorities of cryptographic operations between a secure application that requests cryptographic operations and the existing secure application (which is already allocated as a cryptographic resource being subjected to cryptographic operations). Further, these comparison and selection are performed based on a linked list and a search of priority queue structure such as heap.

Further, upon performing preemptive admission control in determining section 242, reallocating section 246 reallocates the selected existing secure application as a cryptographic resource.

Policy database (hereinafter "policy DB") 244 records the policy setting of each application for performing preemptive admission control.

Further, preemptive admission unit 240 records information related to the secure application that requests cryptographic operations (e.g., application ID, priority level and the requested number of HW channels) in this policy DB 244. To be more specific, the policy settings in policy DB 244 are registered upon determining the communication scheme upon signaling with an external apparatus.

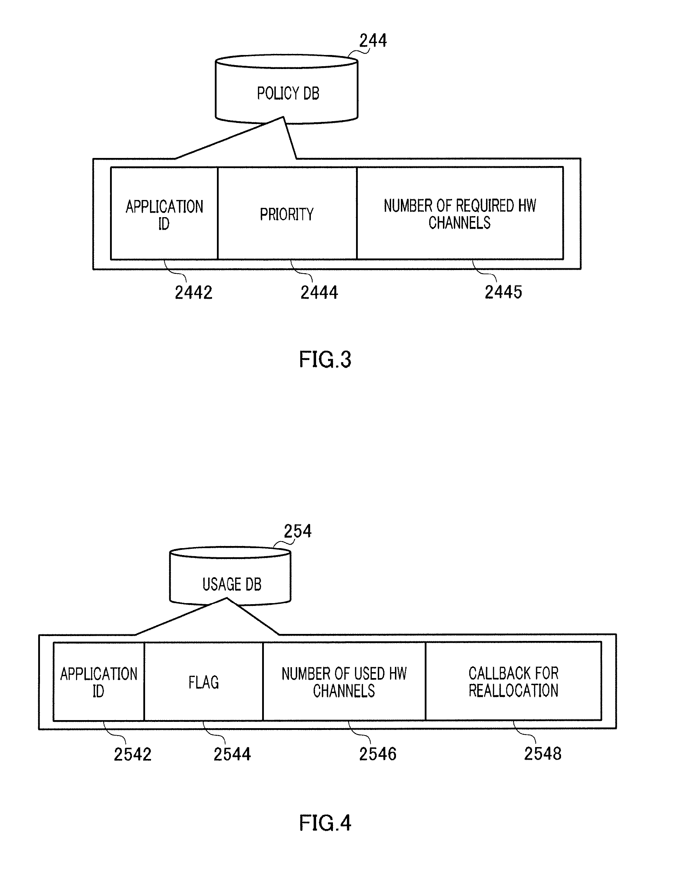

FIG.3 illustrates policy DB.

As shown in FIG.3, as policy setting, policy DB 244 has three fields of application ID 2442, priority 2444 and required HW channel number 2445 that are associated with each other.

Application ID 2442 is identification information to identify each application.

Priority 2444 indicates the priority level of secure applications that require fast cryptographic operations in a plurality of secure applications, and is used to specify the priority in cryptographic operations for secure applications. Further, this priority becomes high when the bandwidth requirement or delaying constrain is higher. For example, like in packet transmission in VoIP or AVoIP, the priority level of a secure application requiring higher delaying constrain than packet transmission used for Web browsing and requiring the fast response speed upon response, that is, the priority level of an application requiring high real-time performance is high.

Further, priority 2444 is determined in a high layer application and is set with session information (i.e., information with packets such as destination IP address, source IP address, port, encryption format and encryption mode) included in information about SA's established upon signaling, in policy database 244 by IKE section 120 via client I/F section 210.

Further, the SA's established upon signaling are recorded in SADB 320 by IKE section 120. When packets arrives at TCP/IP stack 300, SA entries recorded in SADB 320 are referred to via IPSec module 310, and, if the session information (destination/source IP address, port) of the packets match the SA entries, the packets are secure application packets to be processed in cipher management apparatus 200. Therefore, encryption and decryption processing of the packets is performed utilizing HW or SW cipher processing unit 260 allocated by preemptive admission unit 240 via management I/F unit 220.

Required HW channel number 2445 shows the amount of HW cryptographic resources required by the corresponding secure application, and is the number of used channels when cryptographic operations are performed for the application which is a cryptographic resource for HW cipher unit (HW cipher engine) 264.

Reallocating section 246 is a unit for performing allocation, including reallocation, using the existing secure application and a requesting secure application as cryptographic resources for HW cipher unit 264 and SW cipher unit (SW cipher module) 266.

In preemptive admission unit 240 formed as above, for the secure application that is not admitted to be encrypted and decrypted by HW cipher unit 262 in admission unit 230, determining section 242 compares the priorities between the secure application and the existing secure application which is a cryptographic resource for HW cipher unit 264.

If a result of comparison shows that the priority of the requesting secure application is higher than the existing application, the cipher resources in HW cipher unit 264 are shifted to be allocated from the existing application to the requesting application using reallocating section 246. Reallocating section 246 allocates the secure application from which the cipher resources in HW cipher unit 264 are revoked, to SW cipher unit 266.

Further, in preemptive admission unit 240, if determining section 242 decides, using usage resource management section 250, that the cipher resources in HW cipher unit 264 are available, reallocating section 246 allocates the cipher resources in SW cipher unit 266 to HW cipher unit 264. Further, in this allocation processing, if cryptographic operations are performed for a plurality of secure applications in SW cipher unit 266, a secure application having higher priority is allocated as a cryptographic resource for HW cipher unit 264.

Thus, for example, in cases where admission unit 230 does not admit requests of cryptographic operations and where cryptographic operations are performed for a plurality of secure applications at the same time, preemptive admission unit 240 allocates HW cipher unit 264 and SW cipher unit 266 using the priority (priority level) of cryptographic operations for the secure applications, to perform cryptographic operations.

That is, preemptive admission unit 240 dynamically allocates the cipher resources in HW cipher unit 264 or SW cipher unit 266 to secure applications that request cryptographic operations.

Usage resource management section 250 manages cryptographic resources that are the target of cryptographic operations in the cipher engine or the cipher module and that are actually subjected to cryptographic operations in the cipher engine or the cipher module.

Usage resource management section 250 makes admission unit 230 or preemptive admission unit 240 perform admission control or preemptive admission control by finding the cipher engine or cipher module performing cryptographic operations, secure application being subjected to cryptographic operations and such.

To be more specific, usage resource management section 250 is provided with usage resource information acquiring section 252 that acquires use information about cipher resources and usage database (hereinafter "usage DB") 254.

Usage resource information acquiring section 252 is used to report the amount of available cipher resources and report the amount of cipher resources that are currently used by the existing secure application, in response to a request for the usage state in cipher processing unit 260.

FIG.4 illustrates usage DB.

Usage DB 254 illustrated in FIG.4 records the amount of ciphers used by each existing application. Here, entries in usage DB 254 each have four fields of application ID 2542, flag 2544, used HW channel number 2546 and callback 2548 for reallocation.

Application ID 2542 is identification information to identify secure applications that are actually used (existing applications) and is used to identify each of the existing applications.

Further, flag 2544 is information indicating the current cryptographic resource type of SW or HW used for secure applications and is used to indicate cipher resources using secure applications.

Used HW channel number 2546 shows the amount of cipher resources used by the corresponding secure application.

Callback 2548 for reallocation indicates a function pointer, which is used for invoking to perform reallocation of cipher resources upon performing preemptive admission control.

Cipher processing unit 260 is provided with encryption mode and hash mode unit (shown as a "processing mode section" in FIG.2) 262, HW cipher unit 264 and SW cipher unit 266.

Cipher processing unit 260 performs cryptographic operations such as encryption of secure applications, decryption and message digesting, using HW cipher unit 264 or SW cipher unit 266.

Encryption mode and hash mode unit (processing mode section) 262 supports several modes of encryption, decryption and message digesting operations such as encryption and decryption modes of electronic codebook (ECB), cipher-block chaining (CBC), output feedback (OFB), counter (CTR) and F8 modes, and hash modes of keyed-hash message authentication code (HMAC), SSLMAC and AES-XCBC-MAC modes.

HW cipher unit (HW cipher engine) 264 performs cryptographic operations (encryption or decryption processing which is also referred to as "decryption") by the HW in response to a request for cryptographic operations of the requesting secure application, and performs faster and higher performance cryptographic operations than cryptographic operations using SW. Further, encryption and decryption by HW cipher unit 264 are performed by, for example, modes of ECB, CBC, OFB, CTR and F8. Further, upon explaining processing for allocating HW cipher unit 264 to a secure application that requests cryptographic operations and performing cryptographic operations, for ease of explanation, HW cipher unit 264 is also referred to as "HW cipher."

SW cipher unit 266 performs cryptographic operations (encryption and decryption) by the SW in response to a request for cryptographic operations of the requesting secure application, and performs cryptographic operations having relatively lower performance than in HW cipher unit 264. Further, encryption and decryption by SW cipher unit 266 are performed by, for example, modes of ECB, CBC, OFB, CTR and F8. Further, upon explaining processing for allocating SW cipher unit 266 to a secure application that requests cryptographic operations and performing cryptographic operations, for ease of explanation, SW cipher unit 266 is also referred to as "SW cipher."

As described above, in portable terminal 100, preemptive admission unit 240 performs priority level management of applications using policy DB 244, and usage resource management section 250 manages the cipher engine resources that are currently used, using usage database 254.

Next, the operations of mobile terminal 100 will be explained.

First, in portable terminal 100, the layer in which cryptographic operations are managed by cipher management apparatus 200 will be explained using transmission and reception processing of cryptographic packets by portable terminal 100.

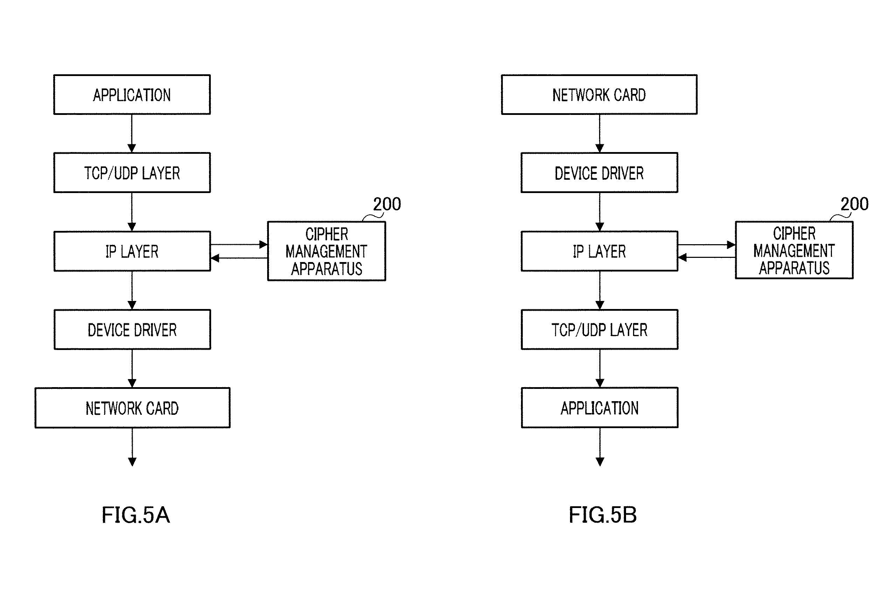

FIG.5 is a flowchart illustrating packet processing upon transmission and reception in portable terminal 100 having the cipher apparatus according to the present invention. Further, FIG.5A is a flowchart of packet processing upon transmission in a portable terminal, and FIG.5B is a flowchart of packet processing upon reception in the portable terminal. Further, arrows show the input directions of signals. Further, the "application" in FIG.5 represents a secure application that drives in the application layer.

As shown in FIG.5A, upon transmitting packets by portable terminal 100, encryption of the packets in cipher management apparatus 200 is performed in the IP layer, and the IP-encrypted packets, which are encrypted packets, are outputted from the IP layer to a device driver and transmitted via a network card.

Further, as shown in FIG.5B, upon receiving packets, decryption of the packets in cipher management apparatus 200 is performed in the IP layer in which the packets are inputted via a network card and device driver, and, after that, the packets are transferred to the application via the TCP/UDP layer.

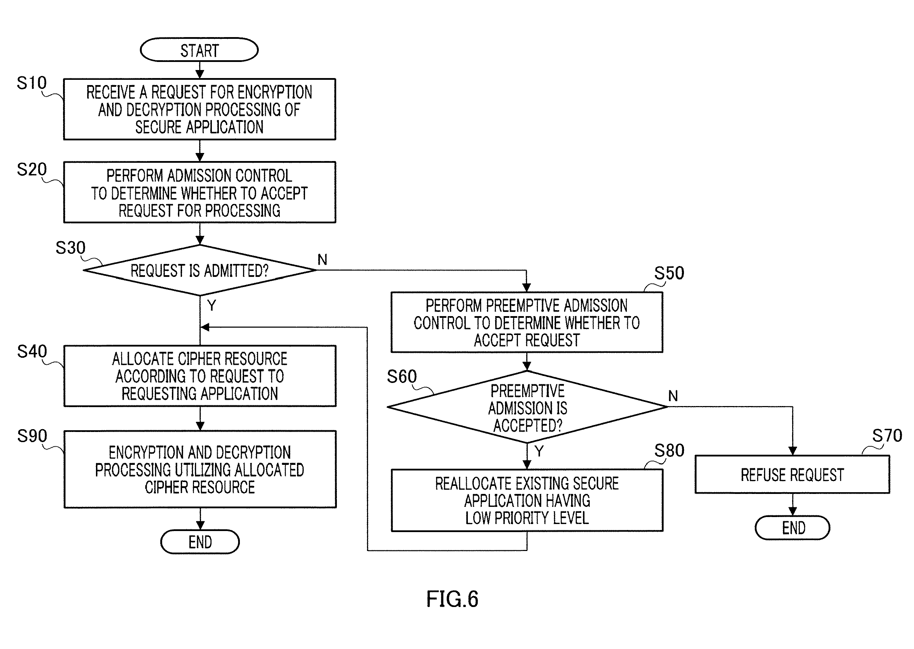

FIG.6 is a flowchart illustrating the preemptive admission control for cipher resource allocation in a mobile terminal according to the present invention.

In step 10, mobile terminal 100 starts a secure application and receives a request to perform cryptographic operations, which are encryption and decryption processing of the secure application, and the flow moves to step S20.

To be more specific, in step S10, execution of a secure application starts using IPsec application 110 or SSL application 130 in an application layer, and, cipher management apparatus 200, admission unit 230 receives a request for cryptographic operations of the secure application via management I/F unit 220.

In step S20, admission control is performed to decide whether to accept the request. For example, admission control is performed to decide whether the amount of available cipher resources satisfy the amount of required cipher resources.

To be more specific, in step S20, admission unit 230, to which cryptographic operations are requested, makes usage DB 254 check the availability state (usable amount) of cipher resources in HW cipher unit 264 via usage resource management section 250.

In step S30, admission unit 230 determines whether admission is accepted. If admission is accepted (i.e., when a request is admitted), the flow moves to step S40, and, if admission is not accepted (i.e., if a request is not admitted), the flow moves to step S50.

To be more specific, in step S30, if it is determined from information in usage DB 254 that the amount of available cipher resources in HW cipher unit 264 is equal to or greater than the amount of cipher resources required by the cryptographic operation request, admission unit 230 accepts admission of the cryptographic operation request, and the flow moves to step S40.

Further, in step S30, if the amount of available cipher resources fails to satisfy the amount of required cipher resources, admission unit 230 does not admit the request, and the flow moves to step S50 to perform preemptive admission control.

Thus, when a request for cryptographic operations for a secure application is received, whether HW cipher unit 264 is available is determined. If HW cipher unit 264 is available, admission unit 230 accepts admission of the request, and, if HW cipher unit 264 is not available, does not admit the request.

In step S50, by comparing the priority of the requesting secure application and the priority of the existing secure application, preemptive admission unit 240 determines whether or not the request is accepted, that is, preemptive admission unit 240 performs preemptive admission control to determine whether the processing request is accepted.

To be more specific, in step S50, determining section 242 refers to policy DB 244 and compares the priority of the secure application that requests cryptographic operations and the priority of the secure application that is already used as a cryptographic resource. If a result of the comparison shows that the priority of the secure application requesting cryptographic operations is higher, the cipher resources in HW cipher unit 264 for the secure application are revoked, and the requesting secure application having a higher priority level is made the cryptographic resource.

In step S60, whether or not the request is accepted is determined, that is, whether or not the preemptive admission is accepted is determined. If the request is not accepted, the flow moves to step S70, and, if the request is accepted, the flow moves to step S80.

To be more specific, in step S60, if there are several existing secure applications having lower priority than the requesting secure application and the cumulative amount of occupied cipher resources is equal to or greater than the amount of insufficient cipher resources in admission control, preemptive admission is decided to be accepted, and the flow moves to step S80. Further, in step 560, when the existing secure applications have a higher priority than the requesting secure application, it is decided that the preemptive admission fails, and the flow moves to step S70.

In step S70, admission unit 230 refuses encryption and decryption of the secure application, that is, admission unit 230 refuses the secure application as a cryptographic resource in HW cipher unit 264.

That is, in step S70, from the determination result in preemptive unit 240, the encryption and decryption request is refused in admission unit 230 because the amount of required resources for cryptographic operations cannot be satisfied. Further, the secure application, for which an encryption and decryption request is refused, is allocated to software cipher unit (also "SW cipher unit") 266.

On the other hand, in step 80, the existing secure applications having lower priority levels are reallocated as cryptographic resources for SW cipher unit 266, and the flow moves to step S40.

To be more specific, in step S80, if the preemptive admission is accepted in admission unit 230, reallocating section 246 in preemptive admission unit 240 allocates secure applications having lower priority levels as cryptographic resources for SW cipher unit 266, based on determination by determining section 242 according to information in policy DB 244, and the flow moves to step S40. For example, if the priority level of an existing secure application allocated as a cryptographic resource for HW cipher unit 264 is lower than the priority level of the requesting secure application (which received an acceptance of preemptive admission), reallocating section 246 reallocates the existing secure application as a cryptographic source for SW cipher unit 266.

In step S40, the designated amount of cipher resources in HW cipher unit (HW cipher engine) 264 is allocated to the requesting secure application, and the flow moves to step S90.

To be more specific, in step S40, reallocating section 246 allocates cipher resources in HW cipher unit 264 to the secure application (which received an acceptance of preemptive admission) that requests encryption and decryption operations.

In this case, admission unit 230 registers the requesting secure application as an application to be encrypted and decrypted in HW cipher unit 264, in usage DB 254 in usage resource management section 250.

In step 590, the secure application performs cryptographic operations of encryption, decryption and message digesting by utilizing the allocated cipher resources.

To be more specific, according to the command from admission unit 230, in cipher processing unit 260, cryptographic operations such as encryption, decryption (cipher decryption) and message digesting are performed for secure applications allocated as cryptographic resources.

Next, in portable terminal 100, if secure application services are provided by performing cryptographic operations using both HW cipher unit 264 and SW cipher unit 266, the operations will be explained at the time a secure application serviced by HW cipher unit 264 terminates.

In portable terminal 100, when a secure application serviced by HW cipher unit 264 terminates, admission unit 230 performs reallocation processing of cipher resources using preemptive admission unit 240 and usage resource management section 250.

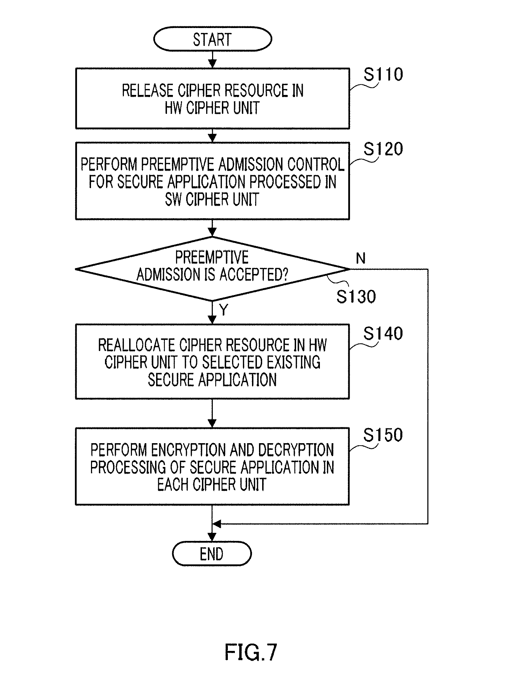

FIG.7 is a flowchart of preemptive admission control about allocation of cipher resources when a secure application serviced by the HW cipher engine which is the HW cipher unit terminates.

In step S110, when cryptographic operations for a secure application in HW cipher unit 264 terminate, cipher processing unit 260 releases HW cipher unit 264, and the flow moves to step S120.

To be more specific, in step S110, a secure application allocated the designated amount of cipher resources in HW cipher unit 264 terminates and the cipher resources in the HW cipher engine are released.

In step S120, preemptive admission control is performed for selecting and admitting at least one secure application as a cryptographic resource for HW cipher unit 264 amongst secure applications (which are existing secure applications being subjected to encryption or decryption processing) serviced by SW cipher unit 266.

To be more specific, in step S120, preemptive admission control is performed by comparing the priorities of existing secure applications serviced by SW cipher unit 266 and comparing the amount of required cipher resources and the amount of released cipher resources.

In step S130, it is determined whether or not preemptive admission for existing secure applications is accepted, that is, it is determined whether or not preemptive admission is accepted for performing processing in HW cipher unit 264 for the secure application selected from the existing secure applications. If the preemptive admission is accepted, the flow moves to step S140, and, if the preemptive admission is not accepted, processing terminates.

In other words, in this step S130, if the amount of released resources in HW cipher unit 264 satisfies the accumulated amount of cipher resources required by the existing secure application that has the highest priority level and that is serviced by SW cipher unit 266, admission unit 230 admits to accept preemptive admission.

In step S140, cipher resources in HW cipher unit 264 are allocated to the existing secure application selected as the preemptive target application from existing secure applications, and the flow moves to step S150.

In step S150, cryptographic operations (encryption and decryption processing) of secure applications allocated as cryptographic resources are performed in HW cipher unit 264 and SW cipher unit 266.

To be more specific, in step S150, cryptographic operations such as encryption, decryption and message digesting are performed for the selected secure application by utilizing the cipher resources in HW cipher unit 264.

To be more specific, upon detecting a request from an application having a high priority level for encryption and decryption processing such as an application requiring high real-time performance represented by VoIp and AVoIP, cipher management apparatus 200 revokes the cipher engine resources and performs distribution control for HW and SW to make the application, from which the cipher engine resources are revoked, continue to be processed in SW cipher module (SW cipher unit) 266.

Further, by managing available HW cipher engine resources by usage DB 254, when usage resource information acquiring section 252 detects available HW cipher engine resources, an application allocated to SW cipher module processing is reallocated to HW cipher engine processing.

Cipher management apparatus 200 manages and controls the state of revocation and reallocation processing of HW cipher engine resources. To be more specific, cipher management apparatus 200 dynamically performs distribution in an HW cipher engine to perform preemptive HW encryption and decryption processing for packets of a real-time application such as VoIP and AVoIP.

According to the configuration of the present invention, in a case where there are packets of multiple applications at the same time, it is possible to perform preemptive processing for packets having a higher priority level of encryption and decryption processing. In other words, unlike conventional techniques, it is possible to perform efficient encryption and decryption processing for packets requiring real-time performance and demanding a processing time severely.

Therefore, in a case where a plurality of secure application services are used, even when a real-time application is present in a plurality of secure applications, by making HW cipher unit 264 perform preemptive cryptographic operations for the real-time application, it is possible to reduce packet processing delay of the real-time application.

Next, in cryptographic operations performed for secure applications by cipher management apparatus 200 in such portable terminal 100, several patterns will be exemplified and explained in detail.

Further, for ease of explanation, although encryption will be explained below among the cryptographic operations performed by cipher management apparatus 200, it is assumed that decryption is equally performed.

Further, in HW cipher unit 264 and SW cipher unit 266, for ease of explanation, encryption processing performed by hardware for secure applications will be referred to as HW encryption, and encryption processing performed by software for secure applications will be referred to as SW encryption.

### <Cryptographic operation example for one secure application>

### 1. (Secure AVoIP transmission by HW cipher)

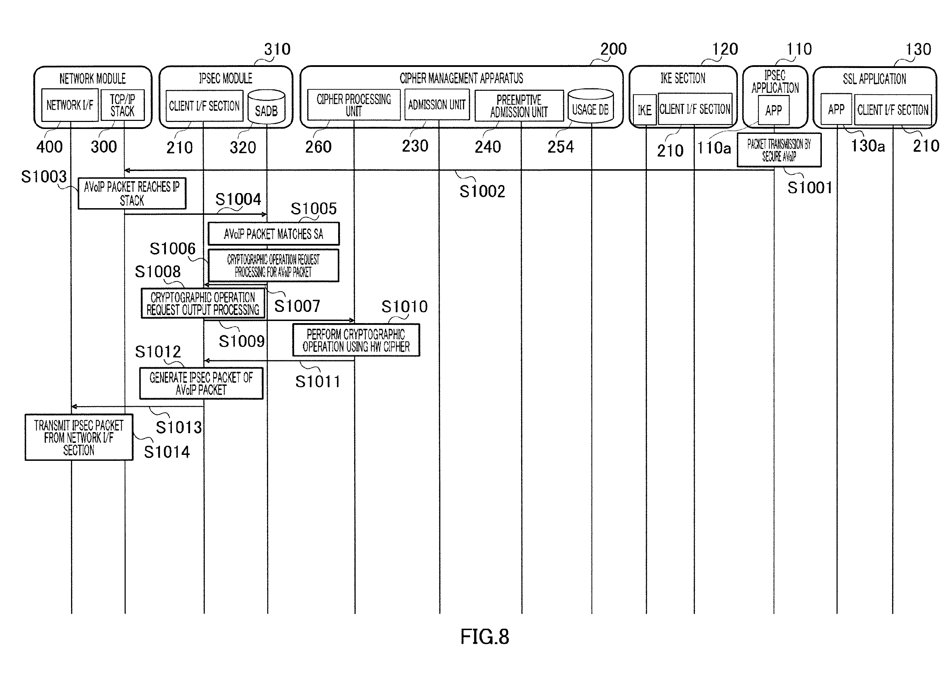

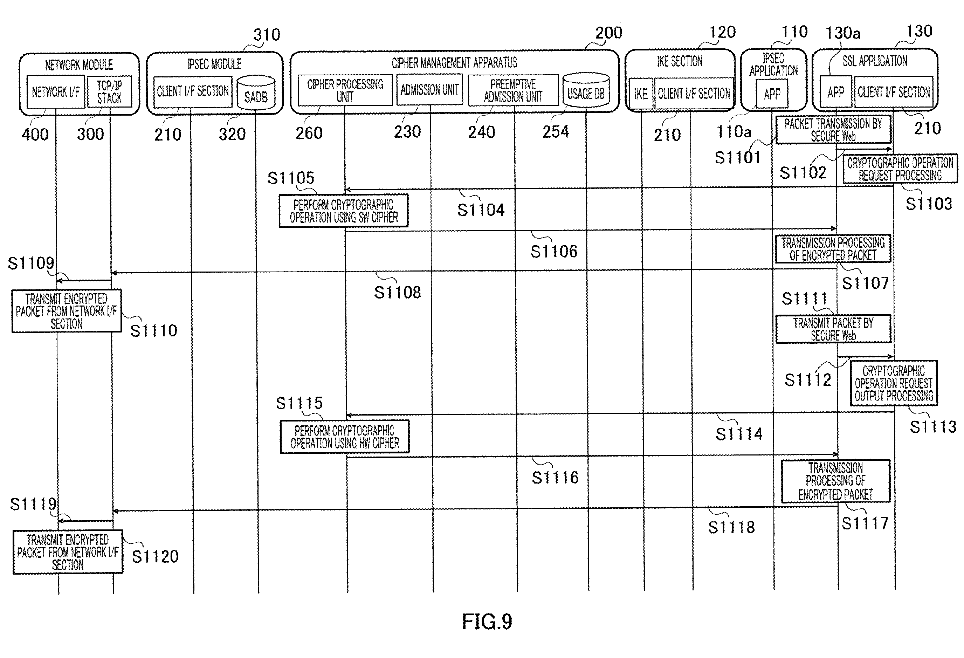

FIG.8 is a sequence diagram showing secure AVoIP transmission processing by the HW cipher in a portable terminal having the cipher apparatus according to the present invention. Further, this sequence diagram illustrates the components of a portable terminal per component that functions in the kernel, the application layer or the network layer. Further, for detailed explanation of functions, the IPsec module of TCP/IP stack that functions in the network layer is separately illustrated from a module that functions as the network module with the network I/F and. These points are the same as in FIG.9 to FIG.11.

First, in step S1001, secure AVoIP 110a, which is an IPsec application in IPsec application 110, performs AVoIP packet transmission processing for TCP/IP stack 300 in the network layer. In step S1002, secure AVoIP 110a transmits AVoIP packets to TCP/IP stack 300.

In step S1003, the IP stack of TCP/IP stack 300 receives secure AVoIP packets, and, in step S1004, outputs the received secure AVoIP packets to SADB (Security Association Data Base) 320 of IPsec module 310 in TCP/IP stack 300.

In step S1005, the AVoIP packets match an SA registered in SADB 320. In step S1006, IPsec module 310 performs cryptographic operation request processing for the AVoIP packets in SADB 320 and, in step S1007, outputs a cryptographic operation request to client I/F section 210.

In steps S1008 and S1009, client I/F section 210 outputs the cryptographic operation request inputted from SADB 320, to cipher processing unit 260.

In step S1010, cipher processing unit 260 performs cryptographic operations using the HW cipher. To be more specific, in step S1010, cipher processing unit 260 performs cryptographic operations for the AVoIP packets using HW cipher unit 264.

In step S1011, cipher processing unit 260 outputs the encrypted AVoIP packets to client I/F section 210 in IPsec module 310.

In step S1012, IPsec module 310 generates IPsec packets of the AVoIP packets in client I/F section 210.

In step S1013, IPsec module 310 outputs the generated IPsec packets to network I/F 400 via client I/F section 210.

In step S1014, network I/F 400 in the network layer transmits the inputted IPsec packets to the outside of portable terminal 100.

Thus, portable terminal 100 performs communication of secure AVoIP subjected to cryptographic operations in HW cipher unit 264.

### 2. (Secure Web transmission by SW cipher and HW cipher)

FIG.9 is a sequence diagram illustrating secure Web transmission processing by the SW cipher and the HW cipher in a portable terminal having the cipher apparatus according to the present invention.

First, in step S1101, in SSL application 130, secure Web 130a, which is an application on SSL, performs Web packet transmission processing, and, in step S1102, outputs the result to client I/F section 210.

In step S1103, SSL application 130 receives secure Web packets (hereinafter "Web packets") from secure Web 130a in client I/F section 210 and performs cryptographic operation request processing. In step S1104, SSL application 130 outputs Web packets to cipher processing unit 260 and requests cryptographic operations.

In step S1105, cipher processing unit 260 performs cryptographic operations using the SW cipher. To be more specific, in step S1105, cipher processing unit 260 performs cryptographic operations for secure Web using SW cipher unit 266.

In step S1106, cipher processing unit 260 outputs the encrypted Web packets to secure Web 130a of SSL application 130.

In step S1107, secure Web 130a performs transmission processing of the encrypted Web packets and, in step S1108, outputs the packets to TCP/IP stack 300 in the network layer.

In step S1109, TCP/IP stack 300 outputs the encrypted packets (Web packets after encryption) inputted from secure Web 130a in the application layer, to network I/F 400.

In step S1110, network I/F 400 transmits the encrypted Web packets to an external apparatus. That is, encrypted packets are transmitted from network I/F 400.

First, in step S1111, in SSL application 130, secure Web 130a, which is an application on SSL, performs transmission processing of Web packets, and, in step S1112, outputs the result to client I/F section 210.

In step Sll13, SSL application 130 receives Web packets from secure Web 130a in client I/F section 210 and performs cryptographic operation request processing. In step S1114, SS application 130 outputs the Web packets to cipher processing unit 260 and requests cryptographic operations.

In step S1115, cipher processing unit 260 performs cryptographic operations using the HW cipher. To be more specific, in step S1115, cipher processing unit 260 performs cryptographic operations for secure Web (Web packets) using HW cipher unit 264.

In step S1116, cipher processing unit 260 outputs the encrypted Web packets to secure Web 130a in SSL application 130.

In step S1117, secure Web 130 performs transmission processing of the encrypted Web packets, and, in step S1118, outputs the packets to TCP/IP stack 300 in the network layer.

In step S1119, TCP/IP stack 300 outputs the encrypted packets (Web packets subjected to encryption) inputted from secure Web 130a in the application layer, to network I/F 400.

In step S1120, network I/F 400 transmits the Web packets after encryption to an external apparatus. That is, encrypted packets are transmitted from network I/F 400.

### 3. (Secure VoIP transmission by SW cipher)

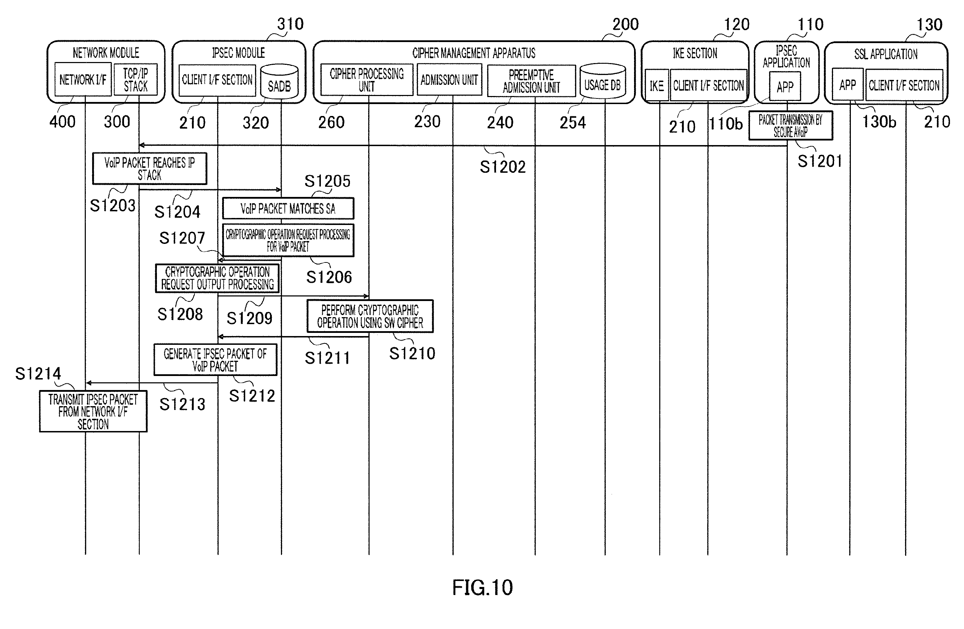

FIG.10 is a sequence diagram illustrating secure VoIP transmission processing by the SW cipher in a portable terminal having the cipher apparatus according to the present invention.

First, in step S1201, secure VoIP 110b, which is an IPsec application in IPsec application 110, performs VoIP packet transmission processing for TCP/IP stack 300 in the network layer. In step S1202, secure VoIP 110b transmits VoIP packets to TCP/IP stack 300.

In step S1203, the IP stack of TCP/IP stack 300 receives secure VoIP packets, and, in step S1204, outputs the received secure VoIP packets to SADB 320 of IPsec module 310 in TCP/IP stack 300.

In step S1205, VoIP packets match an SA registered in SADB 320. In step S1206, IPsec module 310 performs cryptographic operation request processing for the VoIP packets in SADB 320, and, in step S1207, outputs a cryptographic operation request to client I/F section 210.

In steps S1208 and S1209, client I/F section 210 outputs the cryptographic operation request inputted from SADB 320, to cipher processing unit 260.

In step S1210, cipher processing unit 260 performs cryptographic operations using the SW cipher. To be more specific, in step S1210, cipher processing unit 260 performs cryptographic operations for VoIP packets using SW cipher unit 266.

In step S1211, cipher processing unit 260 outputs the encrypted VoIP packets to client I/F section 320 of IPsec module 310.

In step S1212, IPsec module 310 generates IPsec packets of VoIP packets for client I/F section 210.

In step S1213, IPsec module 310 outputs the generated IPsec packets to network I/F 400 via client I/F section 210.

In step S1214, network I/F 400 in the network layer transmits the inputted IPsec packets to the outside of portable terminal 100. That is, IP packets are transmitted from the network interface.

Thus, portable terminal 100 performs communication of secure VoIP subjected to cryptographic operations in SW cipher unit 266.

### 4. (Secure VoIP transmission by HW cipher)

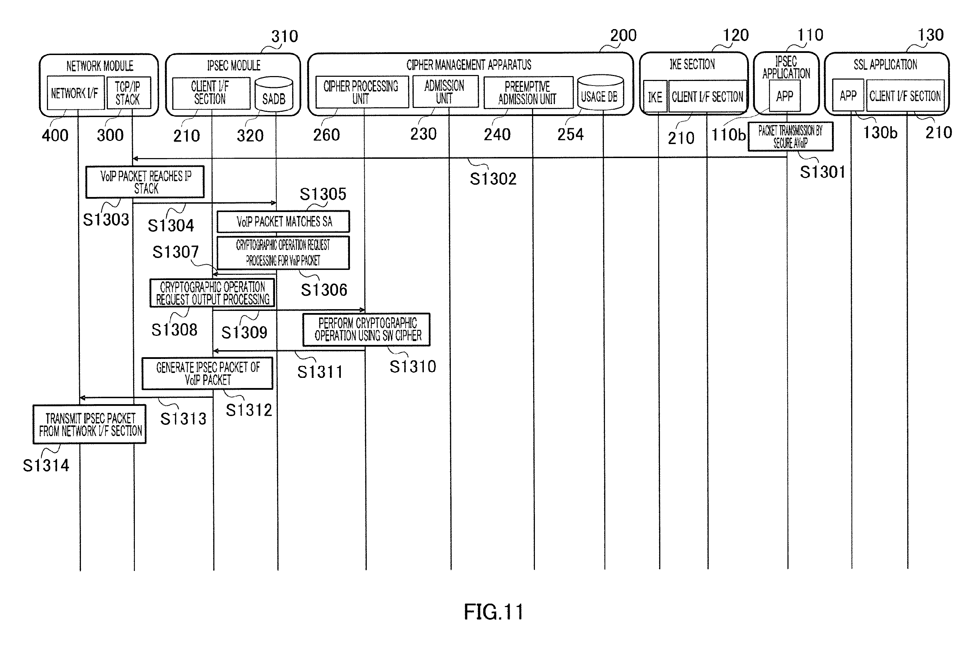

FIG.11 is a sequence diagram illustrating secure VoIP transmission processing by the HW cipher in a portable terminal having the cipher apparatus according to the present invention.

First, in step S1301, secure VoIP 110b, which is an IPsec application in IPsec application 110, performs VoIP packet transmission processing for TCP/IP stack 300 in the network layer. In step S1302, secure VoIP 110b transmits VoIP packets to TCP/IP stack 300.

In step S1303, the IP stack of TCP/IP stack 300 receives secure VoIP packets, and, in step S1304, outputs the received secure VoIP packets to SADB (Security Association Data Base) 320 of IPsec module 310 in TCP/IP stack 300.

In step S1305, the VoIP packets match an SA registered in SADB 320. In step S1306, IPsec module 310 performs cryptographic operation request processing for the VoIP packets, and, in step S1307, outputs a cryptographic operation request to client I/F section 210.

In steps S1308 and S1309, client I/F section 210 outputs the cryptographic operation request inputted from SADB 320, to cipher processing unit 260.

In step S1310, cipher processing unit 260 performs cryptographic operations using the HW cipher. To be more specific, in step S1310, cipher processing unit 260 performs cryptographic operations for VoIP packets using HW cipher unit 264.

In step S1311, cipher processing unit 260 outputs the encrypted VoIP packets to client I/F section 210 in IPsec module 310.

In step S1312, IPsec module 310 generates IPsec packets of VoIP packets of client I/F section 210.

In step S1313, IPsec module 310 outputs the generated IPsec packets to network I/F 400 via client I/F section 210.

In step S1314, network I/F 400 in the network layer transmits the inputted IPsec packets to the outside of portable terminal 100.

Thus, portable terminal 100 performs communication of secure VoIP subjected to cryptographic operations in HW cipher unit 264.

Next, distinct processing in portable terminal 100, that is, processing of cipher management apparatus 200 that manages cryptographic operations for secure applications upon using services by a plurality of secure applications, will be explained.

### <Cryptographic operation example for a plurality of secure applications>

First, as functions of HW cipher unit 264 in portable terminal 100 used in the following explanation, an exemplary maximum amount, an exemplary policy DB snapshot and an exemplary usage DB snapshot will be explained.

Here, it is assumed that HW cipher unit 264 can provide maximum eight channels for cryptographic operations at the same time. Further, the number of channels of eight is an example, and it is equally possible to change the value to other values upon manufacturing.

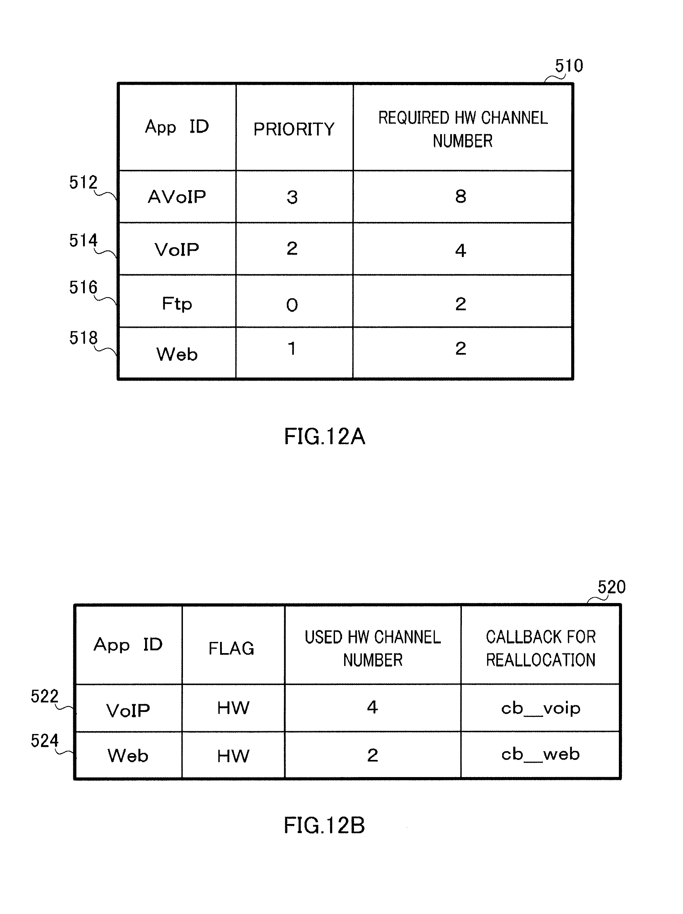

FIG.12 illustrates a policy DB snapshot and usage DB snapshot used in Embodiments, and FIG.12A illustrates a policy DB snapshot and FIG.12B illustrates a usage DB snapshot.

Policy DB snapshot 510 illustrated in FIG.12A has four entries for each corresponding application.

First entry 512 is specified for an AVoIP application and has the highest priority (i.e., highest priority level) 3 and requires maximum eight channels for HW encryption. Second entry 514 is specified for a VoIP application and has the priority (i.e., priority level) 2 and requires four channels for HW encryption.

Third entry 516 is specified for remote file access (Ftp) and has the lowest priority (i.e., priority level) 2 and requires two channels for HW encryption. Fourth entry 518 is specified for Web access (i.e., Web) and has the priority (i.e., priority level) 1 and requires two channels for HW encryption.

Snapshot 520 of usage DB illustrated in FIG.12B includes VoIP application 522 and Web access (Web) 524 as entries.

VoIP application 522 is the first entry and is illustrated in FIG.12B to have four channels in the HW cipher allocated to perform secure communication, and Web access (Web) 524 is the second entry and is illustrated in FIG.12B to use two channels in the HW cipher allocated to perform secure communication.

Usage DB snapshot 520 shows that, in mobile terminal 100, two concurrent secure applications of VoIP and Web access are running on mobile terminal 100 to perform secure communication by HW cipher unit 264.

### (Embodiment 1)

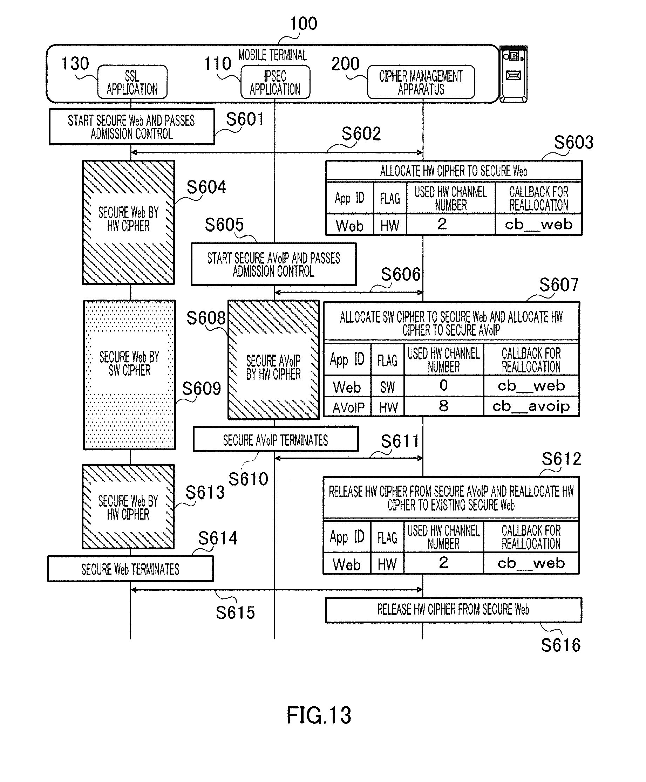

FIG.13 illustrates an outline of Embodiment 1 for processing in a portable terminal having the cipher apparatus according to the present invention. FIG.13 illustrate an example of the state of secure applications and cipher management apparatus in a case where, while executing a secure application service utilizing the HW cipher engine in portable terminal 100, a secure application having a higher priority level than the executed secure application is used.

Here, processing will be explained where a secure application using the HW cipher engine is secure Web, and, while this secure Web service is used, a call of television telephone, which is a secure application having a higher priority level than secure Web, is received.

As shown in FIG.13, first, SLL application (secure Web) 130 starts a secure application in step S601 and transmits a cipher request to cipher management apparatus 200 in step S602.

After receiving the cipher request (in step S602), in step S603, cipher management apparatus 200 accepts the cipher request by admission control, allocates two channels in the HW cipher unit and updates the usage on usage DB 254. Further, in step S603 in FIG.13, the processing detail of cipher management apparatus 200 and the entry state in the usage DB updated by the processing are illustrated.

In step S604, SLL application (secure Web) 130 uses the HW cipher to execute the secure application.

After that, in step S605, IPsec application (secure AVoIP) 110 starts a secure application, and, in step S606, transmits a cipher request to cipher management apparatus 200.

After receiving the cipher request from IPsec application (secure AVoIP) 110, cipher management apparatus 200 executes admission control in step S607. According to policy DB 244, the amount of required channels for processing of IPsec application (secure AVoIP) 110 that transmits the cipher request is eight and six channels are available, and, consequently, the admission control fails.

Therefore, admission control shifts to preemptive admission control in step S607, and, since the AVoIP priority is higher than Web, the preemptive admission control succeeds.

Therefore, cipher management apparatus 200 reallocates the SW cipher to secure Web and thus allocates eight channels in the HW cipher to secure AVoIP. The allocation and reallocation of cipher resources are updated to usage DB 254. Further, in step S607 in FIG.13, the processing detail of cipher management apparatus 200 and the entry state in the usage DB updated by the processing are illustrated.

Next, in step S608, IPsec application (secure AVoIP) 110 uses the HW cipher to execute the secure application.

Meanwhile, in step S609, SLL application (secure Web) 130 uses the SW cipher to execute the secure application.

In step S610, when secure AVoIP terminates, secure AVoIP transmits a cipher resource release request in step S611.

In step S612, cipher management apparatus 200 releases eight channels in the HW cipher and performs preemptive admission control.
Here, cipher management apparatus 200 decides that there exists a secure application using the SW cipher, and, consequently, preemptive admission control succeeds, and cipher management apparatus 200 reallocated two channels in the HW cipher to secure Web. In step S612 in this FIG.13, the processing detail of cipher management apparatus 200 and the entry state of the usage DB updated by the processing are illustrated.

In step S613, SLL application (secure Web) 130 uses the HW cipher to execute the secure application.

In step S614, when encryption and decryption by the HW terminates, that is, when secure Web application terminates, in step S615, SLL application (secure Web) 130 transmits a cipher resource release request. In step S616, cipher management apparatus 200 releases two channels in the HW cipher and performs preemptive admission control. Here, there is no existing application using the SW cipher, and, consequently, the preemptive admission control fails. Therefore, cipher management apparatus 200 in this state does not manage encryption and decryption of any secure applications.

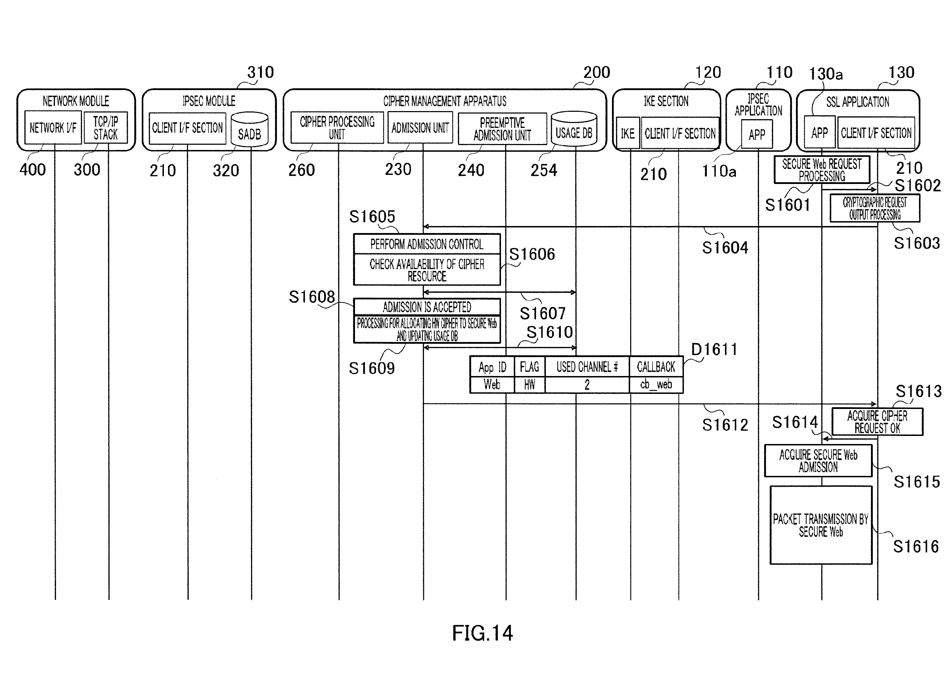

FIG.14 to FIG.18 are sequence diagrams showing processing of Embodiment 1 in a portable terminal having the cipher apparatus according to the present invention. In these figures, table D shows entries of usage DB and, in table D, "used channel #" represents "the number of used HW channels" and "callback" represents a "callback for reallocation." Further, in FIG.14 to FIG.18, these sequence diagrams illustrate the components of a portable terminal per component that functions in the kernel, the application layer or the network layer. Further, for detailed explanation of functions, the IPsec module of TCP/IP stack that functions in the network layer is separately illustrated from a module that functions as the network module with the network I/F.

As shown in FIG.14, in steps S1601 and S1602, secure Web application 130a, which is an SSL application (APP) of SSL application 130, outputs a secure Web request to client I/F section 210.

In steps S1603 and S1604, SSL application 130 performs cryptographic operation (encryption request) processing in client I/F section 210, and outputs a cipher request to admission unit 230 of cipher management apparatus 200.

In step S1605, admission unit 230 that receives as input the cipher request for the secure application in cipher management apparatus 200 performs admission control, and, in steps S1606 and S1607, reads information of usage DB 254 and checks the availability of cipher resources.

In step S1607, when admission unit 230 reads out usage DB 254, a secure application is not present as a cryptographic resource in usage DB 254.

Therefore, in step S1608, admission unit accepts admission of the encryption request.

In steps S1609 and 1610, admission unit 230 allocates the HW cipher to secure Web and updates information about the allocation in usage DB 254.

The number of channels secure Web uses for cryptographic operations from table D1611 as the usage DB is two, and, consequently, in step S1612, admission unit 230 outputs information indicating that the cipher request is okayed, to client I/F section 210 of SSL application 130.

In step S1613, SSL application 130 acknowledges that the cipher request is okayed in client I/F section 210.

In step S1614, SSL application 130 outputs information indicating cipher request admission ("cipher request OK") from client I/F section 210 to secure application (secure Web) 130a. In step S1615, secure application 130a acquires request admission information about secure Web.

In step S1616, secure Web 130a, which is a secure application, transmits Web packets. Further, processing in this step S1616 and subsequent steps are the same as processing (S1111 to S1120) in secure Web transmission using the HW cipher shown in FIG.9, and explanations will be omitted.

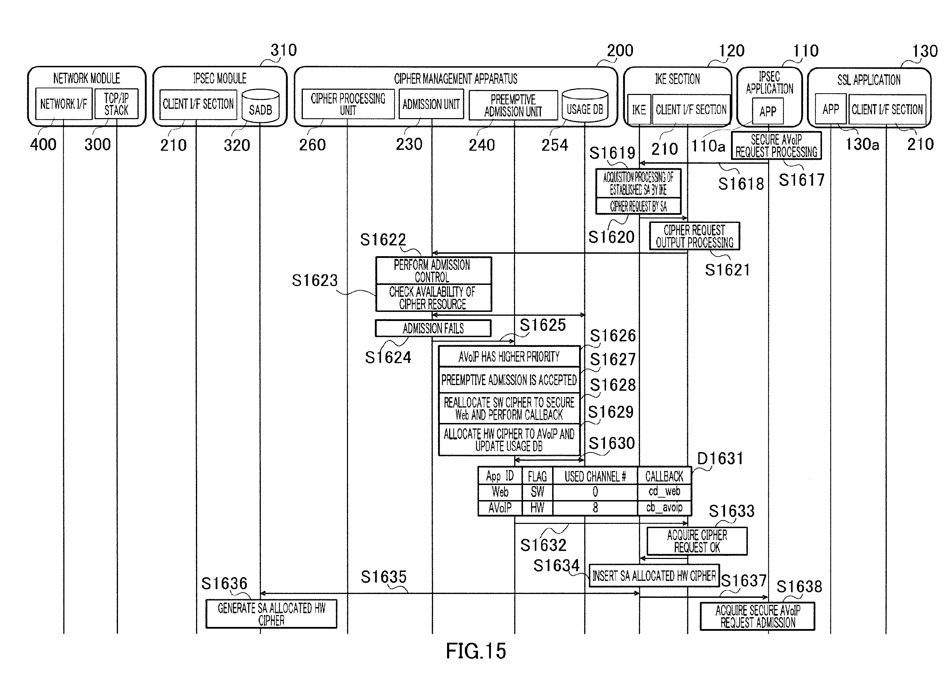

Next, as shown in FIG.15, in steps S1617 and 1618, secure AVoIP 110a, which is a secure application (APP) of IPsec application 110, requests secure AVoIP to IKE section 120.

In step S1619, IKE 120a of IKE section 120 performs key exchange processing for establishing an SA to identify secure AVoIP communication and, in step S1620, outputs to client I/F section 210 information showing that communication, which is performed utilizing the SA (i.e., session information), is encryption processing.

In step S1621, client I/F section 210 acquires the cipher request (encryption request) from IKE 120a and outputs the cipher request to admission unit 230 of cipher management apparatus 200. In other words, in step S1621, IKE section 120 performs processing for outputting a cipher request from client I/F section 210.

In step S1622, admission unit 230 that receives as input the cipher request performs admission control and, in step S1623, checks whether or not there are available cipher resources, using information stored in usage DB 254. In this case, as shown in D1611 in FIG.14, cipher resources in the HW cipher unit are allocated to secure Web 130a in the usage DB. Consequently, in step S1624, admission of the HW cryptographic operation request for AVoIP fails, and a signal with its indication is outputted to preemptive admission unit 240 (step S1625). That is, after admission control fails, the admission control shifts to preemptive admission control in cipher management apparatus 200.

In steps S1626 to 1630, D1631 and step S1632, preemptive admission unit 240 performs preemptive admission control.

In this preemptive admission control, as described above, determining section 242 in preemptive admission unit 240 compares priority levels between the requesting secure application and the existing secure application for which processing is actually performed by the HW cipher. Based on a result of this comparison, according to the priority levels of the secure applications, reallocating section 246 allocates HW cipher unit 264 and SW cipher unit 266 to the secure applications.

Here, in step S1626, determining section 242 reads information of policy DB 244 and determines that the requesting AVoIP has a higher priority level than secure Web which is a secure application being subjected to cipher processing. In step S1627, by this determination, the preemptive admission is accepted, and, in step S1628, reallocating section 246 of preemptive admission unit 240 reallocates the SW cipher to secure Web and invokes cb_Web to perform callback for the corresponding secure Web.

Next, in steps S1629 and 1630, reallocating section 246 allocates the HW cipher to secure AVoIP, and outputs information showing the results of allocation and reallocation, as update information, to usage DB 254 to update usage DB 254.

The usage DB acquires the update information and is updated as table D1631.

Table D1631 stores secure Web allocated as a cryptographic resource, in which the number of used HW channels is zero, for SW cipher and secure AVoIP allocated as a cryptographic resource, in which the number of used HW channels is eight, for the HW cipher.

In step S1632, admission information for the cipher request by preemptive admission control is outputted to client I/F section 210 of IKE section 120.

In step S1633, IKE section 120 acquires cipher request admission (cipher request OK) in client I/F section 210 and outputs the cipher request admission to IKE 120a.

In step S1634, IKE 120a holds an SA allocated that HW cipher as an SA to identify secure AVoIP communication, and, in step S1635, outputs to SADB 320 information about the SA allocated the HW cipher, and, in step S1636, SADB 320 generates the SA allocated the HW cipher.

Further, in step S1637, IKE 120a outputs cipher request admission of secure AVoIP to secure application 110a of IPsec application 110, and, in step S1638, secure AVoIP application 110a acquires the cipher request admission (cipher request OK) of secure AVoIP.

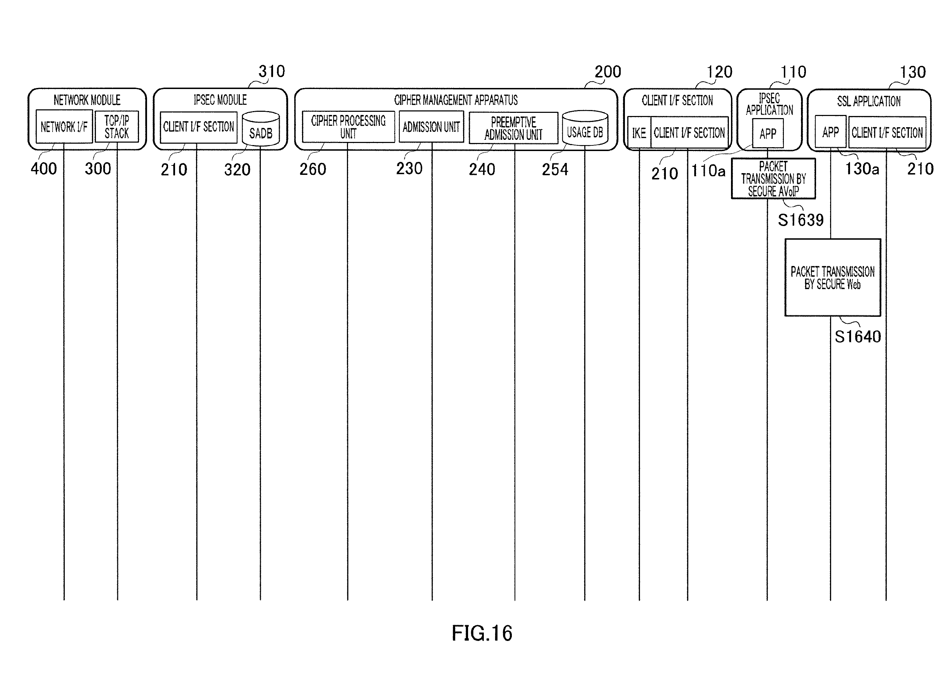

Next, as shown in FIG.16, in step S1639, AVoIP application 110a performs AVoIP packet transmission processing. The processing in this step 1639 is the same as in step S1001 in FIG.8, and, afterwards, the processing shown in FIG.8 are performed to perform AVoIP transmission by the HW cipher.

Further, in step S1640, secure Web 130a, which is the SSL application of SSL application130, performs secure Web packet transmission processing. Further, the processing in this step S1640 is the same as in step S1101 shown in FIG.9, and, afterwards, the processing shown in steps S1102 to S1110 are performed to perform secure Web transmission by the SW cipher.

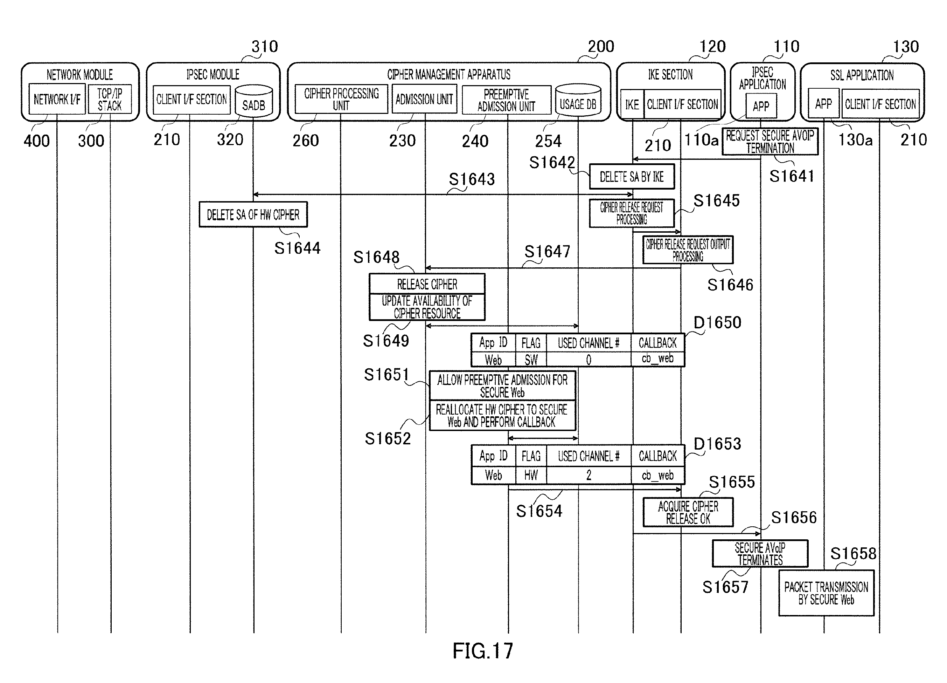

When cryptographic operations for secure AVoIP terminates in portable terminal 100, in step S1641 in FIG.17, secure AVoIP 110a of IPsec application 110 performs secure AVoIP termination request processing and outputs a secure AVoIP termination request to IKE 120a.

In step S1642, IKE section 120 performs deletion processing of the SA held by IKE 120a and, in step S1643, outputs deletion command information for deleting the SA, to SADB 320.

In step S1644, SADB 320 of IPsec module 310 deletes the registered SA by the HW cipher.

In step S1645, IKE 120a performs cipher release request processing and outputs information with its indication to client I/F section 210.

In step S1646, client I/F section 210 acquires a cipher release request, and, in step S1647, the acquired cipher release request is outputted by IKE section 120 from client I/F section 210 to admission unit 230.

In step S1648, admission unit 230 that receives as input the cipher release request releases the cipher unit performing cryptographic operations for secure AVoIP.

In step S1649, admission unit 230 updates the availability of cipher resources by storing information about the released cipher unit in usage DB 254.

Table D1650 as updated usage DB 254 describes the fact that secure Web is processed by the SW cipher.

As described above, when secure Web is processed by the SW cipher and processing by the HW cipher is not performed, in step S1651, preemptive admission unit 240 accepts secure Web as the preemptive admission target.

In step S1652, preemptive admission unit 240 invokes cb_Web which is callback information for reallocation from usage DB 254, to reallocate the HW cipher to secure Web.

In this case, usage DB 254 is rewritten, and table D1653 describes the fact that secure Web is processed by the HW cipher and two HW channels are used.

In step S1654, preemptive admission unit 240 that reallocated the HW cipher to secure Web outputs information with its indication to client I/F section 210 of IKE section 120.

In step S1655, IKE section 120 acknowledges that the cipher release is okayed in client I/F section 210, and, in step S1656, outputs information with its indication from IKE 120a to secure AVoIP 110a which is an IPsec application.

In step S1657, secure AVoIP 110a of IPsec application 110 finds the termination of secure AVoIP.

In step S1658, secure Web 130a, which is the SSL application of SSL application 130, performs secure Web packet transmission processing. Further, the processing in this step S1658 is the same as in step S1111 shown in FIG.9, and the processing of subsequent steps S1112 to S1120 are performed to perform secure Web transmission by the HW cipher.

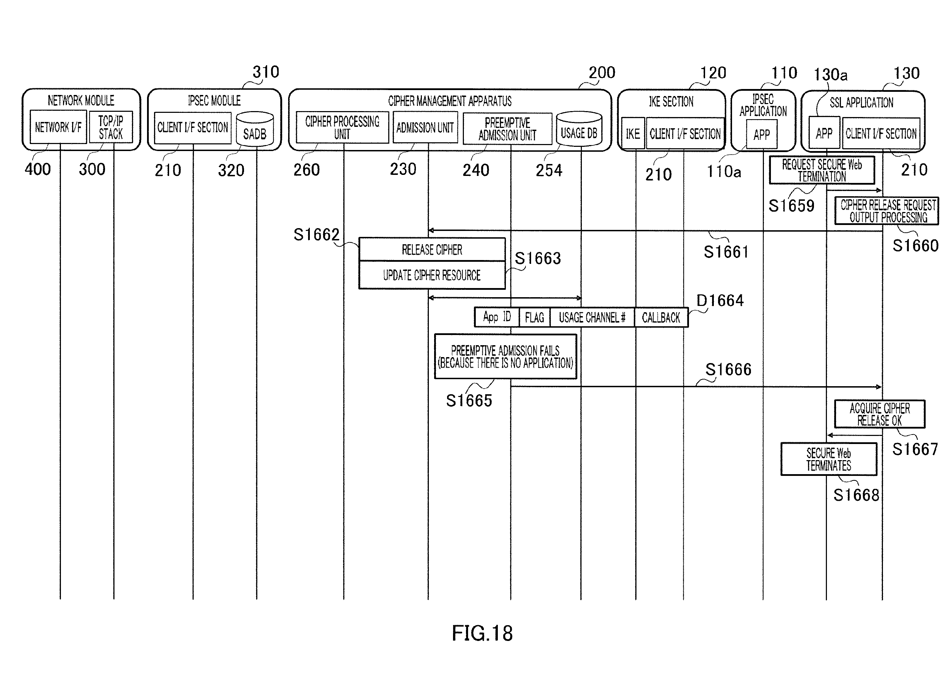

Next, in step S1659 shown in FIG.18, secure Web 130a of SSL application 130 performs secure Web termination request processing and outputs secure Web termination request information to IKE 120a.

In step S1660, client I/F section 210 acquires the cipher release request and, in step S1661, outputs cipher release request information to admission unit 230.

In step S1662, admission unit 230 that receives as input the cipher release request releases the cipher unit performing cryptographic operations for secure Web.

In step S1663, admission unit 230 updates the availability of cipher resources by storing information about the released cipher units in usage DB 254.

In table D1664 as updated usage DB 254, secure applications to be managed are not present.

As described above, after cryptographic operations for secure Web are released, in a state where cryptographic operations are not performed for any secure applications, that is, in a case where services by secure applications are not used, in step S1665, preemptive admission control in preemptive admission unit 240 fails.

In step S1666, preemptive admission unit 240 reports a preemptive admission failure to SSL application 130, and, in step S1667, client I/F section 210 acquires cipher release OK information and reports it to secure Web 130a.

In step S1668, secure Web 130a performs secure Web termination processing.

### (Embodiment 2)

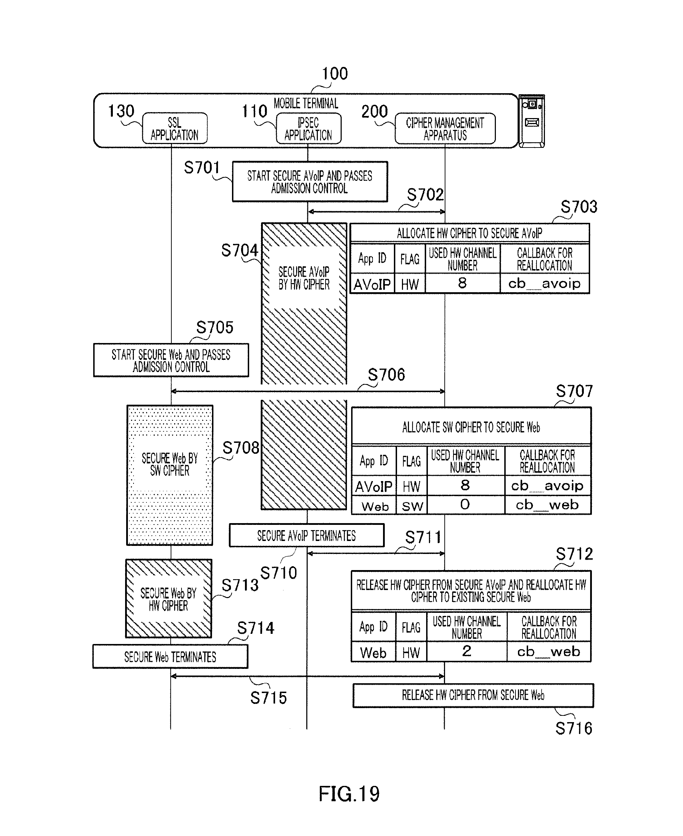

FIG.19 illustrates an outline of Embodiment 2 for processing in a portable terminal having the cipher apparatus according to the present invention. FIG.19 illustrate an example of the state of secure applications and cipher management apparatus in a case where, while executing a secure application service utilizing the HW cipher engine in portable terminal 100, a secure application having a higher priority level than the executed secure application is used.

Here, it is assumed that a secure application using the HW cipher engine is secure AVoIP and an application used during this secure AVoIP service is secure Web.

That is, in this embodiment, processing in portable terminal 100 will be explained where, while a television telephone is used, secure Web (Web browsing), which is a secure application having a lower priority level than secure Web, is executed. Further, it is possible to replace VoIP with secure AVoIP.

As shown in FIG.19, in step S701, IPsec application (also referred to as "secure AVoIP") 110 starts a secure application, and, in step S702, transmits a cipher request to cipher management apparatus 200. In step S703, after receiving the cipher request from secure AVoIP 110, cipher management apparatus 200 admits the cipher request by admission control, allocates eight channels in the HW cipher unit to secure AVoIP 110 and updates the usage on usage DB 254. Further, in step S703 in FIG.19, the entry state of the usage DB updated by processing of cipher management apparatus 200 is illustrated.

In step S704, secure AVoIP 110 uses the HW cipher to execute the secure application.

While the HW cipher for this secure AVoIP is used, in step S705, SSL (also referred to as "secure Web") 130 starts a secure application, and, in step S706, transmits a cipher request to cipher management apparatus 200. After receiving the request, cipher management apparatus 200 performs admission control in step S707. According to policy DB 244, the amount of required channels for secure Web, which is the requesting secure application, is two, and there is no available channel, and, consequently, the admission control fails. Next, the flow moves to preemptive admission control. Here, the priority of the Web is lower than AVoIP, and therefore the preemptive admission control fails.

Cipher management apparatus 200 allocates SW cipher unit 266 to secure Web and updates the usage on the usage DB. The entry state of this updated usage DB is shown in step S707 in FIG.13.

In step S708, secure Web 130 uses the SW cipher to execute the secure application.

In step S710, secure AVoIP 110 terminates, and, in step S711, transmits a cipher resource release request to cipher management apparatus 200.

In step S712, cipher management apparatus 200 releases eight channels in the HW cipher and performs preemptive admission control. In the usage DB in step S712 in FIG.19, a secure application using the SW cipher is present. Therefore, preemptive admission control succeeds, and cipher management apparatus 200 reallocates two channels in the HW cipher to secure Web 130. The usage DB shown illustrated in step S712 in FIG.19 shows the entry state of the usage DB after the reallocation processed by cipher management apparatus 200.

In step S713, secure Web 130 uses the HW cipher reallocated to execute the secure application.

In step S714, secure Web 130 terminates, and, in step S715, transmits a cipher resource release request to cipher management apparatus 200.

In step S716, cipher management apparatus 200 releases two channels in the HW cipher and performs preemptive admission control. In this case, there is no existing application using the SW cipher, and therefore the preemptive admission control fails. Therefore, cipher management apparatus 200 in this state does not manage encryption and decryption of any secure applications.

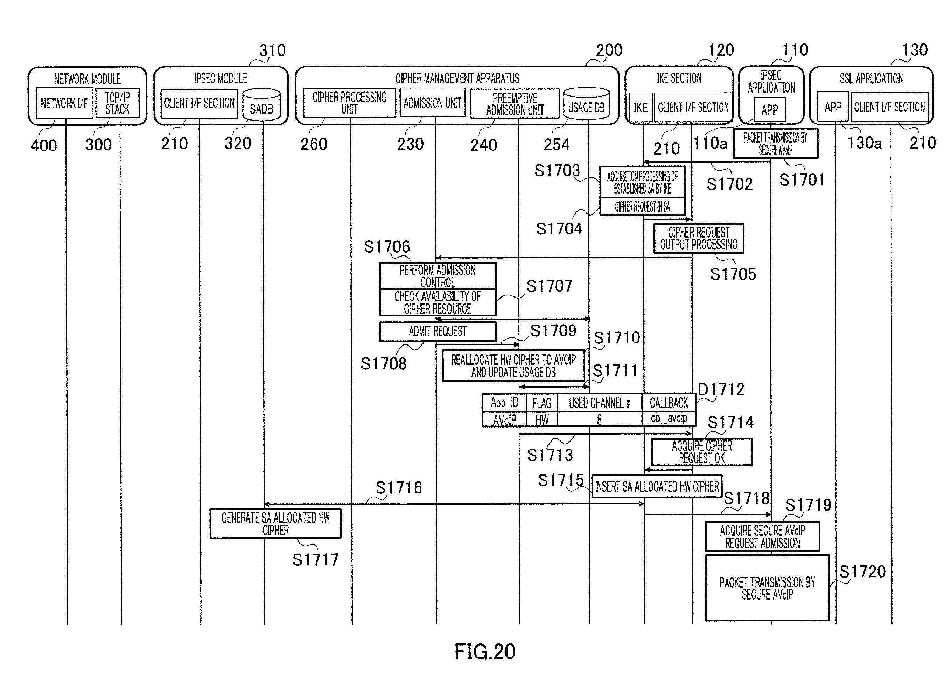

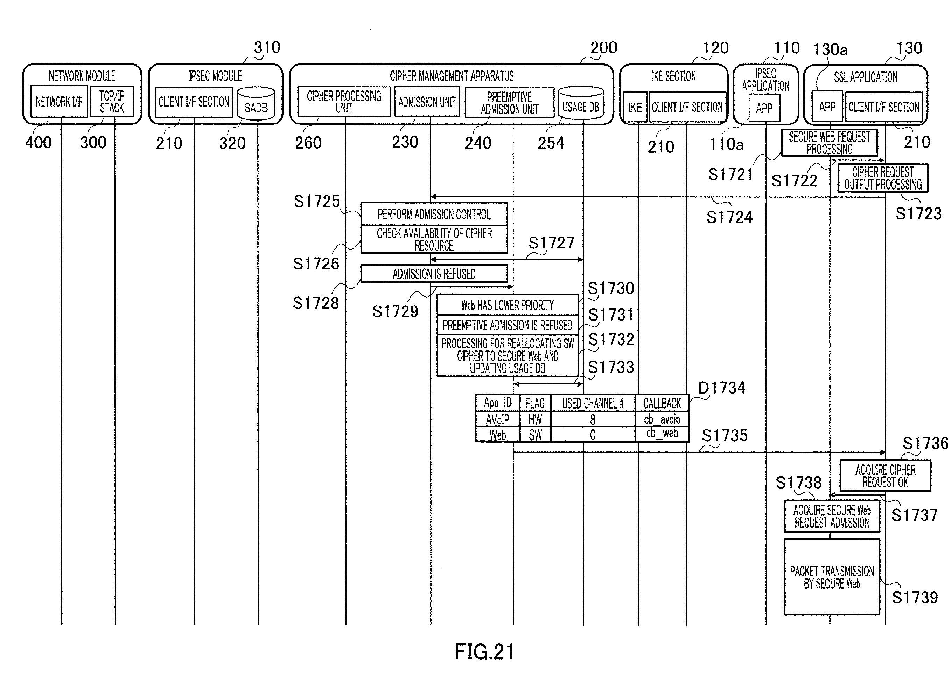

FIG.20 to FIG.23 are sequence diagrams showing processing of Embodiment 2 in a portable terminal having the cipher apparatus according to the present invention. In these figures, table D shows entries of usage DB, and, in table D1611, "used channel #" represents "the number of used HW channels" and "callback" represents a "callback for reallocation." Further, in these FIG.20 to FIG.23, these sequence diagrams illustrate the components of a portable terminal per component that functions in the kernel, the application layer or the network layer. Further, for detailed explanation of functions, the IPsec module of TCP/IP stack that functions in the network layer is separately illustrated from a module that functions as the network module with the network I/F.

In step S1701, secure AVoIP 110a, which is a secure application (APP) of IPsec application 110, performs cryptographic operation request processing of secure AVoIP. In step S1702, secure AVoIP 110a outputs information indicating the cryptographic operation request for secure AVoIP, to IKE section 120.

In step S1703, IKE 120a of IKE section 120 performs key exchange processing for establishing an SA to identify communication of secure AVoIP and, in step S1704, outputs to client I/F section 210 information showing that communication, which is performed utilizing the SA (i.e., session information), is encryption processing.

In step S1705, client I/F section 210 acquires the cipher request (encryption request) from IKE 120a and outputs the cipher request to admission unit 230 of cipher management apparatus 200. In other words, in step S1705, IKE section 120 performs processing for outputting a cipher request from client I/F section 210.

In step S1706, admission unit 230 that receives as input the cipher request performs admission control and, in step S1707, checks whether or not there are available cipher resources, using information stored in usage DB 254.

In step S1707, usage DB 254 read by admission unit 230 does not describe the cipher unit that is used. Consequently, in step S1708, admission unit 230 admits the request, and, in step S1709, outputs information indicating admission to preemptive admission unit 240.

In step S1710, preemptive admission unit 240 allocates the HW cipher to the AVoIP, reports information about the allocation to usage DB 254 (step S1711) and updates usage DB 254.

As shown in table D1712, updated usage DB 254 stores AVoIP that is allocated as a cryptographic resource for the HW cipher and that uses eight HW channels upon adopting HW cipher.

In step S1713, preemptive admission unit 240 outputs information indicating admission to client I/F section 210.

In step S1714, IKE section 120 acquires the cipher request admission (cipher request OK) in client IF section 210 and outputs the cipher request admission to IKE 120a.

In step S1715, IKE 120a holds an SA allocated that HW cipher, as an SA to identify secure AVoIP communication, and, in step S1635, outputs to SADB 320 information about the SA allocated the HW cipher.

In step S1717, SADB 320 generates the SA allocated the HW cipher. Further, in step S1718, IKE 120a outputs cipher request admission of secure AVoIP to secure application 110a of IPsec application 110, and, in step S1719, secure AVoIP application 110a acquires the cipher request admission (cipher request OK) of secure AVoIP.

In step S1639, AVoIP application 110a performs AVoIP packet transmission processing. In this step S1639, the processing in this step 1639 is the same as in step S1001 shown in FIG.8, and the processing shown in FIG.8 are performed to perform AVoIP transmission by the HW cipher.

In steps S1721 and 1722, secure Web application 130a, which is an SSL (APP) application of SSL application 130, outputs a secure Web request to client I/F section 210.

In steps S1723 and S1724, SSL application 130 performs cipher request (encryption) processing in client I/F section 210 and outputs a cipher request to admission unit 230 of cipher management apparatus 200.

In step S1725, admission unit 230 that receives as input the cipher request for the secure application in cipher management apparatus 200 performs admission control, and, in steps S1726 and S1727, reads information of usage DB 254 and checks the availability of cipher resources.

In step S1607, when admission unit 230 reads usage DB 254, AVoIP, which is a secure application, is present as a cryptographic resource in usage DB 254.

Therefore, in step S1728, admission unit 230 refuses the cipher request admission, and, in step S1729, outputs information with its indication to preemptive admission unit 240. Further, admission control shifts to preemptive admission control in cipher management apparatus 200.

In steps S1730 to S1735, preemptive admission unit 240 performs preemptive admission control.

In this preemptive admission control, as described above, determining section 242 in preemptive admission unit 240 compares priority levels between the requesting secure application and the existing secure application for which processing by the HW cipher is actually performed. Based on a result of this comparison, according to the priority levels of the secure applications, reallocating section 246 allocates HW cipher unit 264 and SW cipher unit 266 to the secure applications.

Here, in step S1730, determining section 242 reads information of policy DB 244 and determines that the requesting secure Web has the lower priority level than the AVoIP which is a secure application being subjected to cipher processing. In step S1731, with this determination, the preemptive admission is refused.

Since the preemptive admission to use the HW cipher is refused, in step S1732, preemptive admission unit 240 allocates the SW cipher to secure Web and outputs information about the allocation to the usage DB as update information (step S1733).

Usage DB 254 is updated as table D1734 using the update information.

Table D1734 stores secure Web that has the number of used HW channels, zero, and that is allocated as a cryptographic resource for the SW cipher, in addition to secure AVoIP that has the number of used HW channels, eight, and that is allocated as a cryptographic resource for the HW cipher.

In step S1735, preemptive admission unit 240 outputs admission information (cipher request OK) for the cipher request by preemptive admission control, to client I/F section 210 of IKE section 120.

In step S1736, SSL application acquires cipher request OK in client I/F section 210.

In step S1737, SSL application 130 outputs information showing cipher request admission (cipher request OK), from client I/F section 210 to secure application (secure Web) 130a.

In step S1738, secure application 130a acquires secure Web request admission information.

In step S1739, secure Web 130a, which is a secure application, transmits Web packets. Further, processing in step S1739 and subsequent steps are the same as processing (S1101 to S1110) in secure Web transmission by the SW cipher shown in FIG.9, and explanations will be omitted.

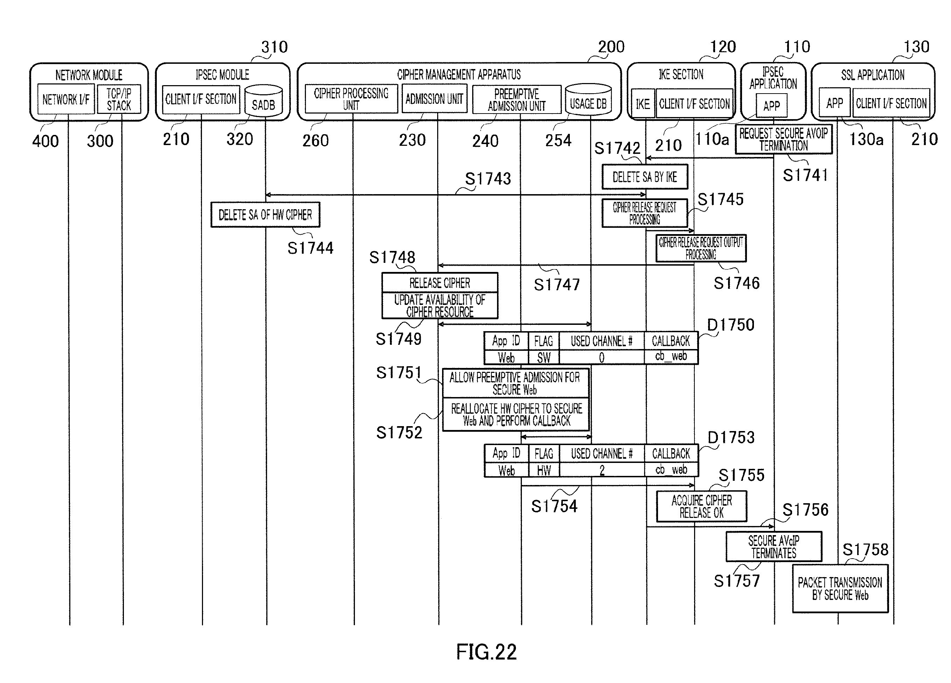

When cryptographic operations for secure AVoIP terminates in portable terminal 100, in step S1741 in FIG.22, secure AVoIP 110a of IPsec application 110 performs secure AVoIP termination request processing and outputs a secure AVoIP termination request to IKE 120a.

In step S1742, IKE section 120 performs deletion processing of the SA held by IKE 120a, and, in step S1743, outputs deletion command information for deleting the SA, to SADB 320.

In step S1744, SADB 320 of IPsec module 310 deletes the registered SA by the HW cipher.

In step S1745, IKE 120a performs cipher release request processing and outputs information with its indication to client I/F section 210.

In step S1746, client I/F section 210 acquires a cipher release request, and, in step S1747, the acquired cipher release request is outputted by IKE section 120 from client I/F section 210 to admission unit 230.

In step S1748, admission unit 230 that receives as input the cipher release request releases the cipher unit performing cryptographic operations for secure AVoIP.

In step S1749, admission unit 230 updates the availability of cipher resources by storing information about the released cipher unit in usage DB 254.

Table D1750 as updated usage DB 254 stores the fact that secure Web is processed by the SW cipher.

As described above, when secure Web is processed by the SW cipher and processing by the HW cipher is not performed, in step S1651, preemptive admission unit 240 accepts secure Web as the preemptive admission target.

In step S1752, preemptive admission unit 240 invokes cb_Web which is callback information for reallocation from usage DB 254, to reallocate the HW cipher to secure Web.

In this case, usage DB 254 is rewritten, and table D1653 describes the fact that secure Web is processed by the HW cipher and two HW channels are used.

In step S1754, preemptive admission unit 240 that reallocated the HW cipher to secure Web outputs information with its indication to client I/F section 219 of IKE section 120.

In step S1755, IKE section 120 acquires cipher release OK in client I/F section 210 and, in step S1756, outputs information with its indication from IKE 120a to secure AVoIP 110a which is an IPsec application.

In step S1757, secure AVoIP 110a of IPsec application 110 finds the termination of secure AVOID.

In step S1758, secure Web 130a, which is the SSL application of SSL application 130, performs secure Web packet transmission processing. Further, the processing in this step S1758 is the same as in step 51111 shown in FIG.9, and the processing of subsequent steps S1112 to S1120 are performed to perform secure Web transmission by the HW cipher.

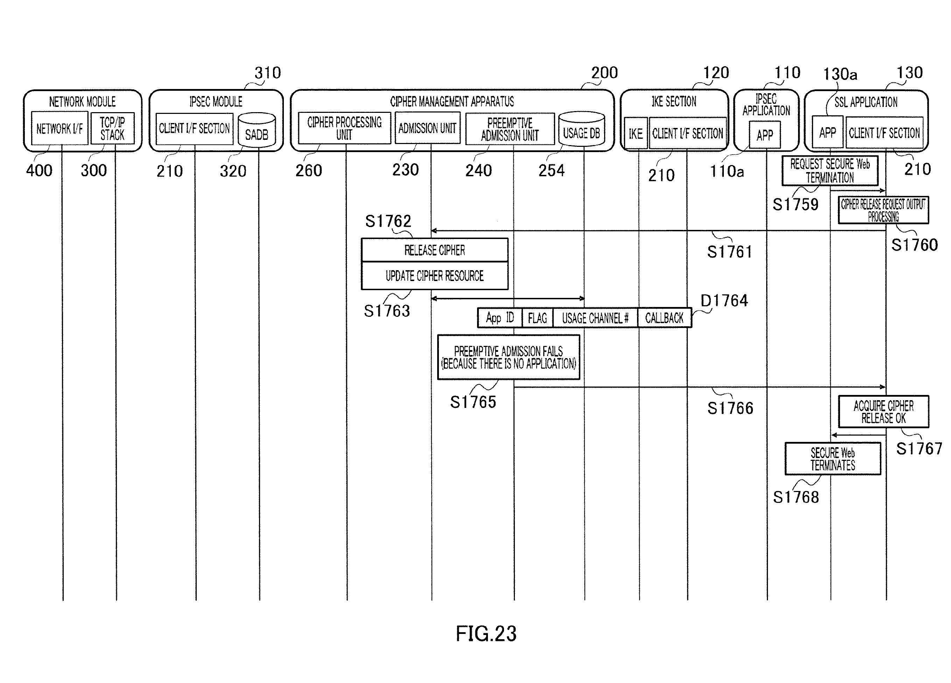

Next, in step S1759 shown in FIG.23, secure Web 130a of SSL application 130 performs secure Web termination request processing, and outputs secure Web termination request information to IKE 120a.

In step S1760, client I/F section 210 acquires the cipher release request (cryptographic operations release request), and, in step S7661, outputs cipher release request information to admission unit 230.

In step S1762, admission unit 230 that receives as input the cipher release request releases the cipher unit performing cryptographic operations for secure Web.

In step S1763, admission unit 230 updates the availability of cipher resources by storing information about the released cipher units in usage DB 254.

In table D1764 as updated usage DB 254, secure applications to be managed are not present.

As described above, after cryptographic operations for secure Web are released, in a state where cryptographic operations are not performed for any secure applications, that is, in a case where services by secure applications are not used, in step S1765, preemptive admission control in preemptive admission unit 240 fails.

In step S1766, preemptive admission unit 240 reports a preemptive admission failure to SSL application 130, and, in step S1767, client I/F section 210 acquires cipher release OK information and reports it to secure Web 130a.

In step S1768, secure Web 130a performs secure Web termination processing.

### (Embodiment 3)

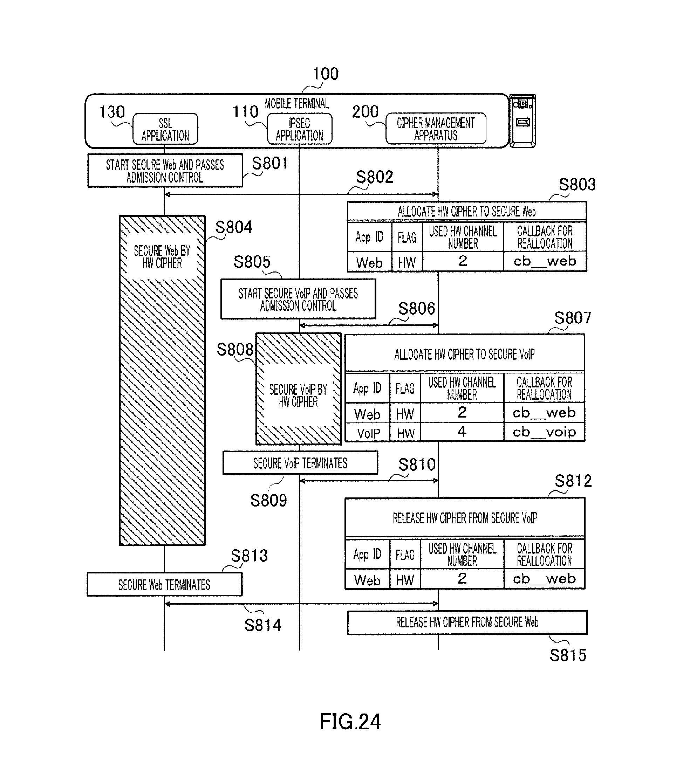

FIG.24 illustrates an outline of Embodiment 3 for processing in a portable terminal having the cipher apparatus according to the present invention. FIG.24 illustrate an example of the state of secure applications and cipher management apparatus in a case where, while executing a secure application service utilizing an HW cipher engine in portable terminal 100, a secure application having a higher priority level than the executed secure application is used.

Here, it is assumed that a secure application using a HW cipher engine is secure Web, and, while this secure Web service is used, a secure application having a higher priority level than secure Web is used.

That is, in this embodiment, processing in portable terminal 100 will be explained where, during Web browsing, a call is performed using secure VoIP, which is a secure application having a higher priority level than the used secure Web. Further, it is possible to replace secure VoIP with secure AVoIP.

As shown in FIG.24, SLL application (secure Web) 130 starts a secure application in step S801 and transmits a cipher request (cryptographic operation request) to cipher management apparatus 200 in step S802.

In step S803, after receiving the cipher request, cipher management apparatus 200 accepts the cipher request by admission control, allocates two channels in HW cipher unit 264 and updates the usage on usage DB 254. Further, in step S803 in FIG.24, the processing detail of cipher management apparatus 200 and the entry state in the usage DB updated by the processing are illustrated.

In step S804, secure Web 130 uses the HW cipher to execute the secure application. That is, secure Web 130 is encrypted and decrypted by allocated HW cipher unit 264.

After that, in step S805, IPsec application (also referred to as "secure VoIP") 110 starts a secure application, and, in step S806, transmits a cipher request to cipher management apparatus 200.

Cipher management apparatus 200 that receives as input the cipher request performs admission control in step S807. According to policy DB 244, the amount of required channels for secure VoIP, which is the requesting secure application, is four (two channels for speech input and output and two channels for controlling connection) and six channels are available, and, consequently, the admission control succeeds.

Therefore, cipher management apparatus 200 allocates the HW cipher to secure VoIP. By this means, allocation of cipher resources is updated to usage DB 254. Further, in step S607 in FIG.13, the processing detail of cipher management apparatus 200 and the entry state in the usage DB updated by the processing are illustrated. In step S808, secure VoIP 110 uses the HW cipher to execute the secure application. In this case, secure Web and secure VoIP are allocated as resources for the HW cipher, and, in HW cipher unit 264, cryptographic operations are performed for both secure Web and secure VoIP at the same time. The reason is that, out of eight usable channels in HW cipher unit 264, two channels are allocated to secure Web and four channels are allocated to secure VoIP. HW cipher unit 264 can perform cryptographic operations in parallel until the number of channels allocated to secure applications is eight.

In step S809, when secure VoIP terminates, secure VoIP 110 transmits a cipher resource release request to cipher management apparatus 200 in step S810.

In step S812, cipher management apparatus 200 releases four channels in the HW cipher and performs preemptive admission control. In this case, there is no existing secure application using the SW cipher, the preemptive admission control fails. Further, in step S812 in FIG.24, the processing detail of cipher management apparatus 200 and the entry state of the usage DB updated by the processing are illustrated.

In step S813, secure Web terminates and, in step S814, transmits a cipher resource release request to cipher management apparatus 200.

In step S815, cipher management apparatus 200 releases two channels in the HW cipher and performs preemptive admission control. In this case, there is no existing application using the SW cipher, and therefore the preemptive admission control fails. Therefore, cipher management apparatus 200 in this state does not manage encryption and decryption of any secure applications.

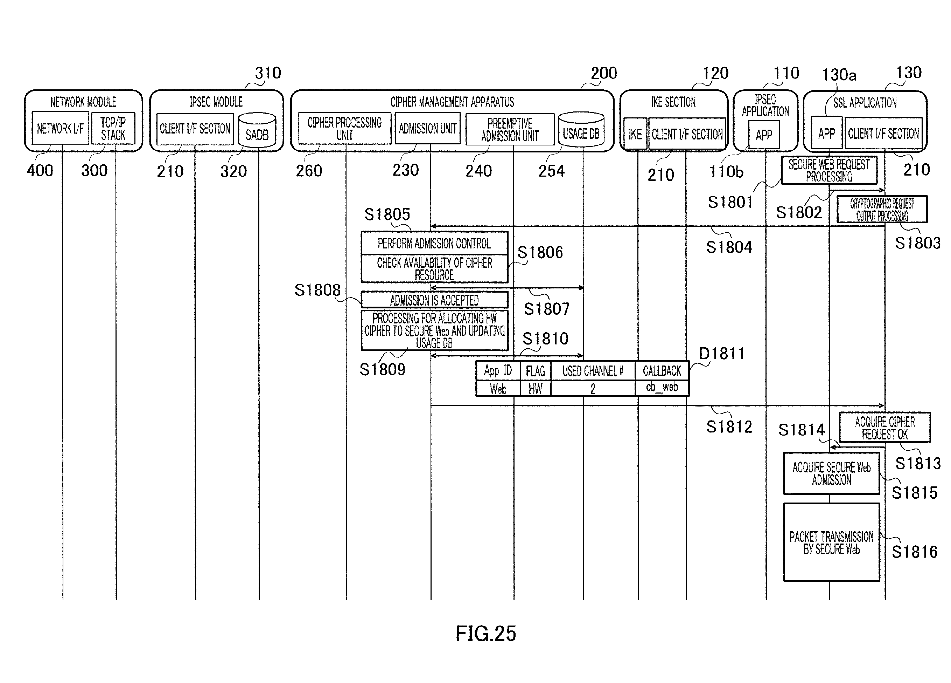

FIG.25 to FIG.28 are sequence diagrams showing processing of Embodiment 3 in a portable terminal having the cipher apparatus according to the present invention. In these figures, table D shows entries of usage DB, and, in table D, "used channel #" represents "the number of used HW channels" and "callback" represents a "callback for reallocation." Further, in FIG.20 to FIG.23, these sequence diagrams illustrate the components of a portable terminal per component that functions in the kernel, the application layer or the network layer. Further, for detailed explanation of functions, the IPsec module of TCP/IP stack that functions in the network layer is separately illustrated from a module that functions as the network module with the network I/F.

As shown in FIG.25, in steps S1801 and S1802, secure Web application 130a, which is the SSL application (APP) of SSL application 130, outputs a secure Web request to client I/F section 210.

In steps S1803 and S1804, SSL application 130 performs cryptographic operation (encryption request) processing in client I/F section 210 and outputs a cipher request to admission unit 230 of cipher management apparatus 200.

In step S1805, admission unit 230 that receives as input the cipher request for the secure application in cipher management apparatus 200 performs admission control, and, in steps S1806 and S1807, reads information of usage DB 254 and checks the availability of cipher resources.

In step S1807, usage DB 254 read by admission unit 230 does not describe a used cipher unit. That is, there is no secure application as a cryptographic resource in usage DB 254.

Therefore, in step S1808, admission unit 230 accepts admission of the encryption request.

In steps S1809 and 1810, admission unit 230 allocates the HW cipher to secure Web and updates information about the allocation in usage DB 254.

The number of channels secure Web uses for cryptographic operations from table D1811 of usage DB is two, and, consequently, in step S1812, admission unit 230 outputs information indicating that the cipher request is okayed, to client I/F section 210 of SSL application 130.

In step S1813, SSL application 130 acquires cipher request OK in client I/F section 210.

In step S1814, SSL application 130 outputs information indicating cipher request admission (cipher request OK) from client I/F section 210 to secure application (secure Web) 130a. In step S1815, secure application 130a acquires request admission information about secure Web.

In step S1816, secure Web 130a, which is a secure application, transmits Web packets. Further, processing in this step S1816 and subsequent steps are the same as processing (51111 to S1120) in secure Web transmission using the HW cipher shown in FIG.9, and explanations will be omitted.

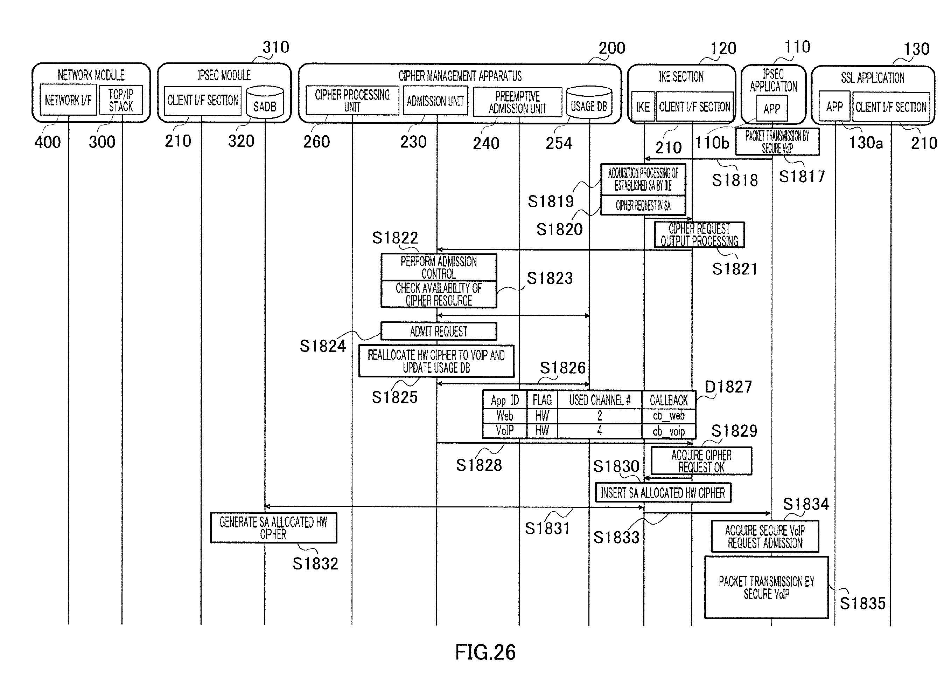

In step S1817 shown in FIG.26, secure VoIP 110b, which is a secure application (APP) of IPsec application 110, outputs information indicating the cryptographic operation request for secure VoIP, to IKE section 120. In step S1818, secure VoIP 110b outputs information indicating the cryptographic operation request for secure VoIP, to IKE section 120.

In step S1819, IKE 120a of IKE section 120 performs key exchange processing for establishing an SA to identify secure VoIP communication, and, in step S1820, outputs to client I/F section 210 information showing that communication, which is performed utilizing the SA (i.e., session information), is encryption processing.

In step S1821, client I/F section 210 acquires the cipher request (encryption request) from IKE 120a and outputs the cipher request to admission unit 230 of cipher management apparatus 200.

In step S1822, admission unit 230 that receives as input the cipher request performs admission control, and, in step S1823, checks whether or not there are available cipher resources, using information stored in usage DB 254.

In step S1823, in usage DB 254 read by admission unit 230, although the HW cipher unit that performs HW encryption is allocated to secure Web, the used HW channel number is two. From information of policy DB 244, the used HW channel number of secure VoIP, which is the requesting secure application, is four (see FIG.8). That is, the number of available channels in HW cipher unit 264 is eight, and, consequently, determining section 242 of preemptive admission unit 240 determines that it is possible to use the requesting secure application as a resource for the HW cipher.

Therefore, in step S1824, admission unit 230 accepts the request.

In step S1825, reallocating allocates HW cipher to secure AVoIP, and, in step S1826, outputs information showing the results of allocation and reallocation, as update information, to update usage DB 254.

In table D1827 as usage DB 254 updated by acquiring update information, secure Web having the number of used HW channels, two, is allocated as a cryptographic resource for the HW cipher, and, furthermore, secure VoIP having the number of used HW channels, four, is allocated as a cryptographic resource for the HW cipher.

In step S1828, admission unit 230 outputs admission information for the cipher request by preemptive admission control, to client I/F section 210 of IKE section 120.

In step S1829, IKE section 120 acquires cipher request admission (cipher request OK) in client I/F section 210 and outputs the cipher request admission to IKE 120a.

In step S1830, IKE 120a holds an SA allocated that HW cipher as an SA to identify secure AVoIP communication, and, in step S1831, outputs to SADB 320 information about the SA allocated the HW cipher.

In step S1832, SADB 320 generates the SA allocated the HW cipher.

Further, in step S1833, IKE 120a outputs cipher request admission of secure VoIP to secure application 110b of IPsec application 110, and, in step S1834, secure VoIP application 110b acquires the cipher request admission (cipher request OK) of secure VoIP.

In step S1835, VoIP application 110b performs VoIP packet transmission processing. In this step S1835, the processing in this step 1835 is the same as in step S1301 shown in FIG.11, and the subsequent processing shown in FIG.8 are performed to perform VoIP transmission by the HW cipher.

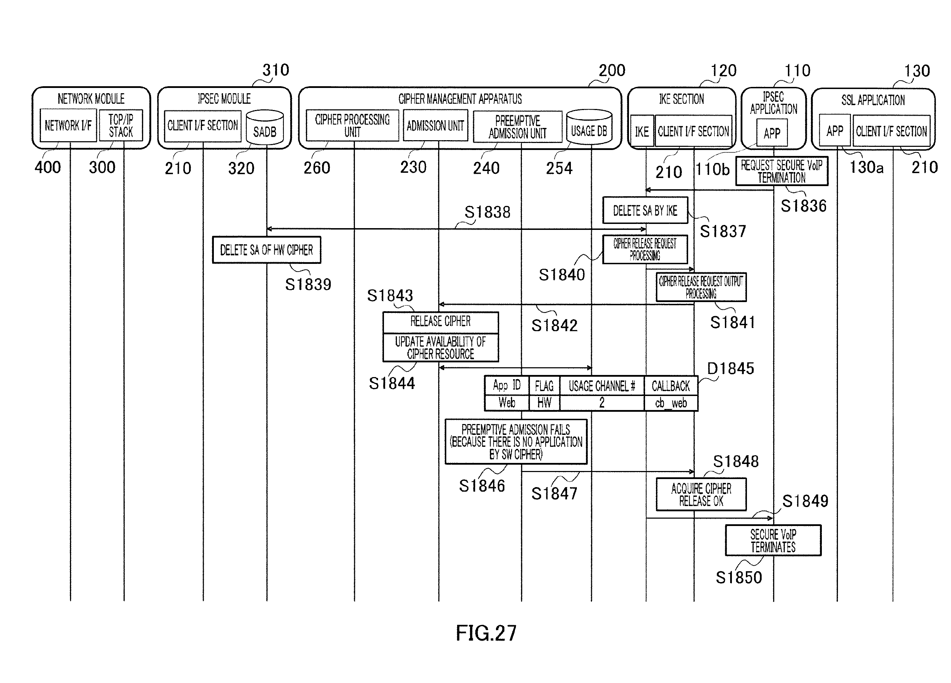

When cryptographic operations for secure VoIP terminates, in step S1836 in FIG.27, secure VoIP 110b of IPsec application 110 performs secure VoIP termination request processing and outputs a secure VoIP termination request to IKE 120a.

In step S1837, IKE section 120 performs deletion processing of the SA held by IKE 120a, and, in step S1838, outputs deletion command information for deleting the SA, to SADB 320.

In step S1839, SADB 320 of IPsec module 310 deletes the registered SA by the HW cipher.

In step S1840, IKE 120a performs cipher release request processing and outputs information with its indication to client I/F section 210.

In step S1841, client I/F section 210 acquires a cipher release request, and, in step S1842, the acquired cipher release request is outputted by IKE section 120 from client I/F section 210 to admission unit 230.

In step S1843, admission unit 230 that receives as input the cipher release request releases the cipher unit performing cryptographic operations for secure VoIP.

In step S1844, admission unit 230 updates the availability of cipher resources by storing information about the released cipher unit in usage DB 254.

Table D1845 as updated usage DB 254 describes the fact that secure Web is processed with two channels in the HW cipher.

In step S1846, preemptive admission unit 240 cannot perform preemptive admission control because there is no secure application using the SW cipher, and, in step S1847, outputs information with its indication to client I/F section 210.

In step S1848, IKE section 120 acknowledges that the cipher release is okayed in client I/F section 219, and, in step S1849, outputs secure VoIP 110b, which is an IPsec application, from IKE 120a.

In step S1850, secure VoIP 110b of IPsec application 110 finds the termination of secure VoIP.

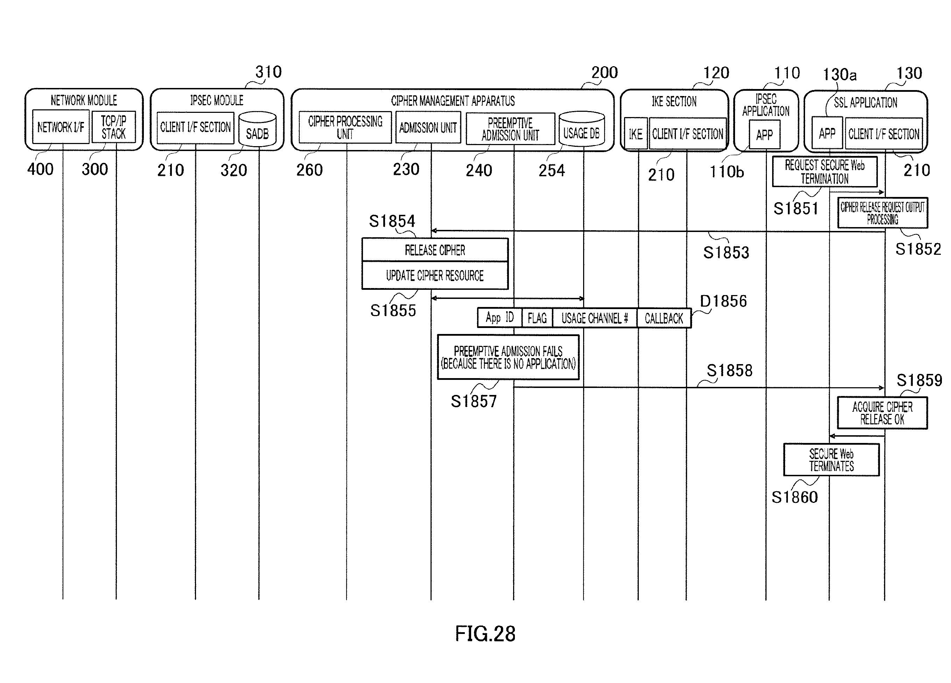

Next, in step S1851 shown in FIG.28, secure Web 130a of SSL application 130 performs secure Web termination request processing and outputs secure Web termination request information to IKE 120a.

In step S1852, client I/F section 210 acquires the cipher release request (cryptographic operation release request), and, in step S1853, outputs cipher release request information to admission unit 230.

In step S1854, admission unit 230 that receives as input the cipher release request releases the cipher unit performing cryptographic operations for secure Web.

In step S1855, admission unit 230 updates the availability of cipher resources by storing information about the released cipher units in usage DB 254.

In table D1856 as updated usage DB 254, secure applications to be managed are not present.

As described above, after cryptographic operations for secure Web are released, in a state where cryptographic operations are not performed for any secure applications, that is, in a case where services by secure applications are not used, in step S1857, preemptive admission control in preemptive admission unit 240 fails.

In step S1858, preemptive admission unit 240 reports a preemptive admission failure to SSL application 130, and, in step S1859, client I/F section 210 acquires cipher release OK information and reports it to secure Web 130a.

In step S1860, secure Web 130a performs secure Web termination processing.

### (Embodiment 4)

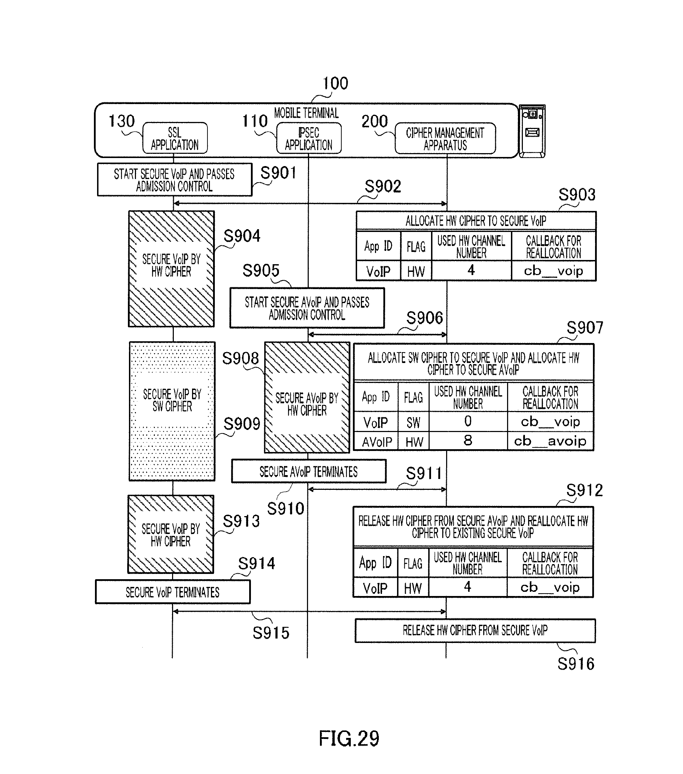

FIG.29 illustrates an outline of Embodiment 4 for processing in a portable terminal having the cipher apparatus according to the present invention. FIG.29 illustrate an example of the state of secure applications and cipher management apparatus in a case where, while a secure application service is executed utilizing the HW cipher engine in portable terminal 100, a secure application having a higher priority level than the executed secure application is used.

Here, processing will be explained where a secure application using the HW cipher engine is secure Web, and, while this secure Web service is used, an AVoIP service is used at the same time.

As shown in FIG.29, first, in step S901, secure AVoIP 110 starts a secure application and, in step S902, transmits a cipher request to cipher management apparatus 200.

In step S903, cipher management apparatus 200 that receives as input the cipher request admits the cipher request by admission control, allocates four channels in the HW cipher unit to secure VoIP 110 and updates the usage on usage DB 254. Further, in step S903 in FIG.29, the processing detail of cipher management apparatus 200 and the entry state of the usage DB updated by processing of cipher management apparatus 200 are illustrated.

In step S904, secure VoIP 110 allocated four channels in the HW cipher unit uses the HW cipher to execute the secure application.

After that, secure AVoIP 110 starts a secure application and, in step S906, transmits a cipher request to cipher management apparatus 200.

In step S907, cipher management apparatus 200 that receives as input the request performs admission control. According to policy DB 244, the amount of required channels is eight, and four channels are available, and, consequently, the admission control fails. Next, in cipher management apparatus 200, the flow moves to preemptive admission control. Here, the AVoIP priority is higher than the VoIP, and therefore the preemptive admission control succeeds.

Therefore, cipher management apparatus 200 invokes cb_voip to update the change from HW cipher to SW cipher in the SA of SADB 320 for reallocating four channels in the HW cipher to secure VoIP and performing secure communication by IPsec module 310 using the SW cipher.

Further, cipher management apparatus 200 allocates eight channels of the HW cipher to secure AVoIP. Reallocation and allocation of cipher resources are updated to usage DB 254. In step S907 in FIG.29, the entry state of this updated usage DB and the processing detail of cipher management apparatus 200 are both illustrated.

Next, in step S908, secure AVoIP 110 allocated to cipher unit 264 as an HW cryptographic resource uses the HW cipher to execute the secure application.

Further, meanwhile, in step S909, secure VoIP 110 allocated to SW cipher unit 266 as an SW cryptographic resource uses the SW cipher to execute the secure application.

In step S910, when secure AVoIP terminates, secure AVoIP 110 transmits a cipher resource release request to cipher management apparatus 200 in step S911.

In step S912, cipher management apparatus 200 releases eight channels in the HW cipher and performs preemptive admission control.

In this preemptive admission control, a secure application (secure VoIP) using the SW cipher is present in the usage DB. Therefore, the preemptive admission control succeeds, and cipher management apparatus 200 invokes cb_voip to update the change from HW cipher to SW cipher in the SA of SADB 320 for reallocating four channels in the HW cipher to secure VoIP and performing secure communication by IPsec module 310 using the SW cipher. Further, in step S912 in FIG.29, the processing detail of cipher management apparatus 200 and the entry state of the usage DB updated by the processing are illustrated.

Next, in step S913, secure VoIP 110 allocated cipher resources in HW cipher unit 264 uses the HW cipher to perform secure communication.

In step S914, secure VoIP terminates, and, in step S915, transmits a cipher resource release request to cipher management apparatus 200.

In step S916, cipher management apparatus 200 releases four channels in the HW cipher and performs preemptive admission control. Here, there is no existing application using the SW cipher, and, consequently, the preemptive admission control fails. Therefore, cipher management apparatus 200 in this state does not manage encryption and decryption of any secure applications.

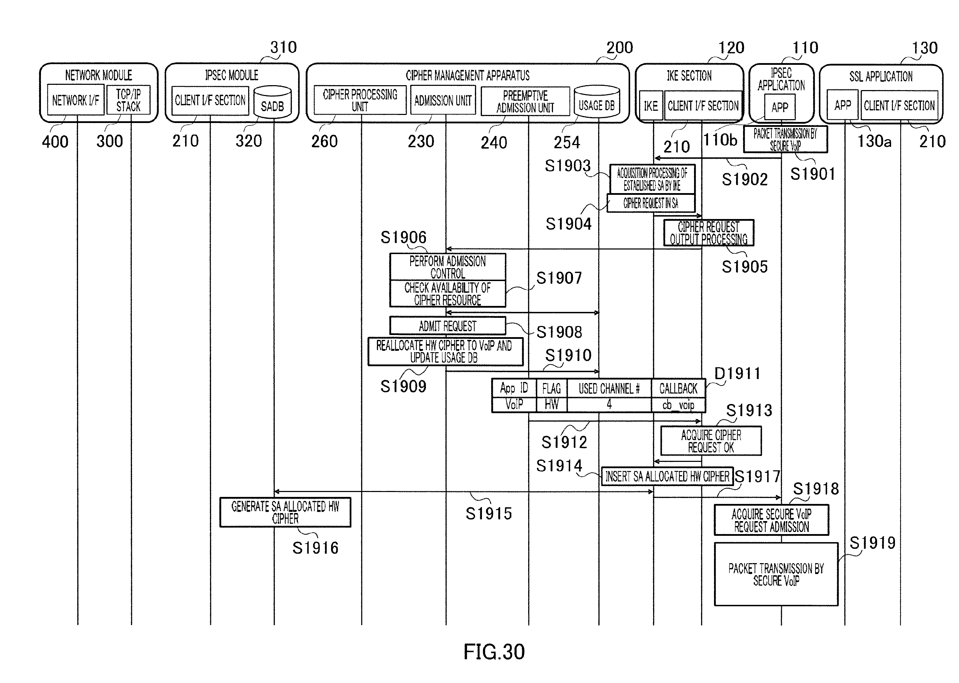

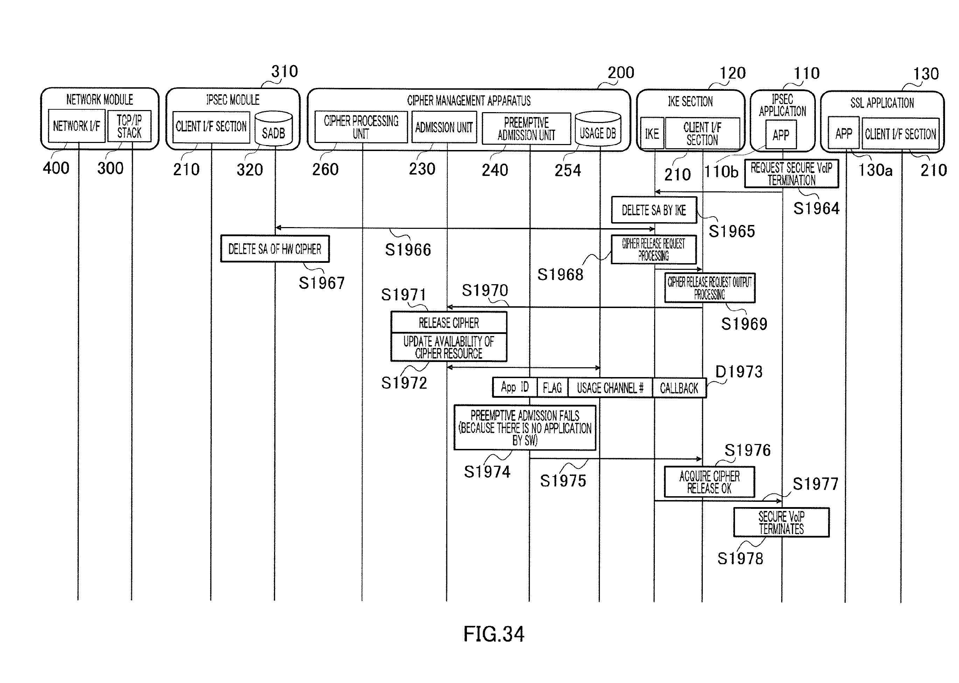

FIG.30 to FIG.34 are sequence diagrams showing processing of Embodiment 4 in a portable terminal having the cipher apparatus according to the present invention. In these figures, table D shows entries of usage DB and, in table D, "used channel #" represents "the number of used HW channels" and "callback" represents a "callback for reallocation." Further, in FIG.30 to FIG.34, these sequence diagrams illustrate the components of a portable terminal per component that functions in the kernel, the application layer or the network layer. Further, for detailed explanation of functions, the IPsec module of TCP/IP stack that functions in the network layer is separately illustrated from a module that functions as the network module with the network I/F.

In step S1901, secure VoIP 110b, which is a secure application (APP) of IPsec application 110, performs cryptographic operation request processing of secure VoIP. In step S1902, secure VoIP 110b outputs information indicating the cryptographic operation request for secure VoIP, to IKE section 120.

In step S1903, IKE 120a of IKE section 120 performs key exchange processing for establishing an SA to identify communication of secure VoIP, and, in step S1904, outputs to client I/F section 210 information showing that communication, which is performed utilizing the SA (i.e., session information), is encryption processing.

In step S1905, client I/F section 210 acquires the cipher request (encryption request) from IKE 120a and outputs the cipher request to admission unit 230 of cipher management apparatus 200.

In step S1906, admission unit 230 that receives as input the cipher request performs admission control, and, in step S1907, checks whether or not there are available cipher resources, using information stored in usage DB 254.

In step S1907, in usage DB 254 read by admission unit 230, there is no cipher unit to be allocated the HW cipher unit that performs HW encryption.

Consequently, in step S1908, admission unit 230 admits the request.

In step S1709, the HW cipher is allocated to secure AVoIP, and, in step S1910, information showing the results of allocation and reallocation is outputted, as update information, to usage DB 254 to update usage DB 254.

As shown in table D1911 as usage DB 254 updated by acquiring the update information, secure VoIP, in which the number of used HW channels is eight, as a cryptographic resource for HW cipher.

In step S1912, admission unit 230 outputs information indicating admission of the cipher request by preemptive admission, to client I/F section 210 of IKE section 120.

In step S1913, IKE section 120 acquires the cipher request admission (cipher request OK) in client IF section 210 and outputs the cipher request admission to IKE 120a.

In step S1914, IKE 120a holds an SA allocated that HW cipher, as an SA to identify secure VoIP communication and in step S1915, outputs to SADB 320 information about the SA allocated the HW cipher.

In step S1916, SADB 320 generates the SA allocated the HW cipher.

Further, in step S1917, IKE 120a outputs cipher request admission of secure VoIP to secure application 110b of IPsec application 110, and, in step S1918, secure VoIP application 110b acquires the cipher request admission (cipher request OK) of secure VoIP.

In step S1919, VoIP application 110b performs VoIP packet transmission processing. In this step S1919, the processing in this step 1919 is the same as in step S1301 shown in FIG.11, and, afterwards, the processing shown in FIG.8 are performed to perform VoIP transmission by the HW cipher.

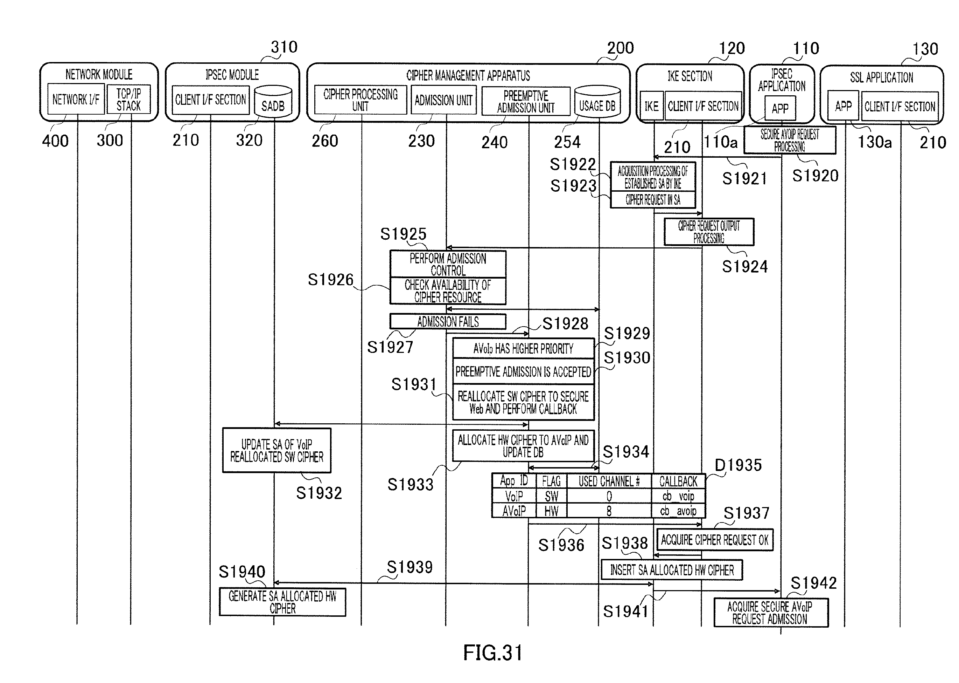

Further, processing in steps S1920 to S1930 shown in FIG.31 are the same as processing (S1617 to S1627) in shown in FIG.15, and explanations will be omitted.

In steps S1920 and 1921, secure AVoIP 110a, which is a secure application (APP) of IPsec application 110, requests secure AVoIP to IKE section 120

In step S1922, IKE 120a of IKE section 120 performs key exchange processing for establishing an SA to identify secure AVoIP communication, and, in step S1923, outputs to client I/F section 210 information showing that communication, which is performed utilizing the SA (i.e., session information), is encryption processing.

In step S1924, client I/F section 210 acquires the cipher request (encryption request) from IKE 120a, and outputs the cipher request to admission unit 230 of cipher management apparatus 200.

In step S1925, admission unit 230 that receives as input the cipher request performs admission control, and, in step S1926, checks whether or not there are available cipher resources, using information stored in usage DB 254. In this case, as shown in table D1911 (see FIG.30), in usage DB 254, cipher resources in the HW cipher unit are allocated to secure VoIP 110b having the number of used channels, four.

Consequently, in step S1927, admission of the HW cryptographic operation request for the AVoIP fails, and a signal with its indication is outputted to preemptive admission unit 240 (step S1928). That is, after admission control fails, the admission control shifts to preemptive admission control in cipher management apparatus 200.

In steps S1929 to 1934, D1935 and step S1936, preemptive admission unit 240 performs preemptive admission control.

In this preemptive admission control, as described above, determining section 242 in preemptive admission unit 240 compares priority levels between the requesting secure application and the existing secure application for which processing is actually performed by the HW cipher. Based on a result of this comparison, according to the priority levels of the secure applications, reallocating section 246 allocates HW cipher unit 264 and SW cipher unit 266 to the secure applications.

Here, in step S1929, determining section 242 reads information of policy DB 244 and determines that the requesting AVoIP has a higher priority level than secure VoIP which is a secure application being subjected to cipher processing. In step S1930, by this determination, the preemptive admission is accepted.

In step S1931, reallocating section 246 of preemptive admission unit 240 reallocates the SW cipher to secure VoIP. Further, in step S1931, cb_voip is invoked to perform processing for updating the SA.

That is, in step S1931, preemptive admission unit 240 allocates SW cipher to secure VoIP, invokes cb_voip for callback and outputs it to SADB320 to update the SA.

In step S1932, SADB 320 acquires information from preemptive admission unit 240 and updates the SA of the VoIP reallocated the SW cipher.

In steps S1933 and 1934, reallocating section 246 allocates the HW cipher to secure AVoIP, outputs information showing the results of allocation and reallocation, as update information, to usage DB 254 and update usage DB 254.

Usage DB 254 acquires the update information and is updated as table D1935.

Table D1935 stores secure VoIP allocated as a cryptographic resource having the number of used HW channels, zero, for the SW cipher and secure AVoIP allocated as a cryptographic resource having the number of used HW channels, eight, for the HW cipher.

In step S1936, admission information for the cipher request by preemptive admission control is outputted to client I/F section 210 of IKE section 120.

In step S1937, IKE section 120 acquires cipher request admission (cipher request OK) in client I/F section 210 and outputs the cipher request admission to IKE 120a.

In step S1938, IKE 120a holds an SA allocated that HW cipher as an SA to identify secure AVoIP communication, and, in step S1635, outputs to SADB 320 information about the SA allocated the HW cipher, and, in step S1636, SADB 320 generates the SA allocated the HW cipher.

Further, in step S1941, IKE 120a outputs cipher request admission of secure AVoIP to secure application 110a of IPsec application 110, and, in step S1942, secure AVoIP application 110a acquires the cipher request admission (cipher request OK) of secure AVoIP.

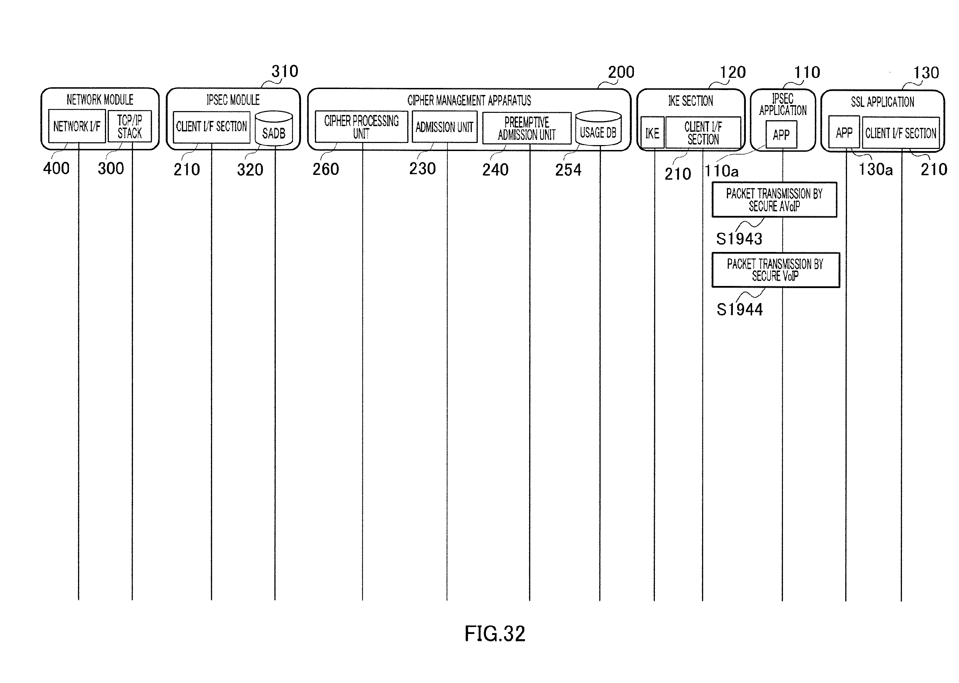

Next, as shown in FIG.32, in step S1943, AVoIP application 110a performs AVoIP packet transmission processing. The processing in this step 1943 is the same as in step S1001 in FIG.8, and, afterwards, the processing shown in FIG.8 are performed to perform AVoIP transmission by the HW cipher.

Further, in step S1944, VoIP application 110b performs VoIP packet transmission processing. Further, the processing in this step S1944 is the same as in step S1201, and, after this processing, the processing shown in FIG.10 is performed to perform secure VoIP transmission by the SW cipher.

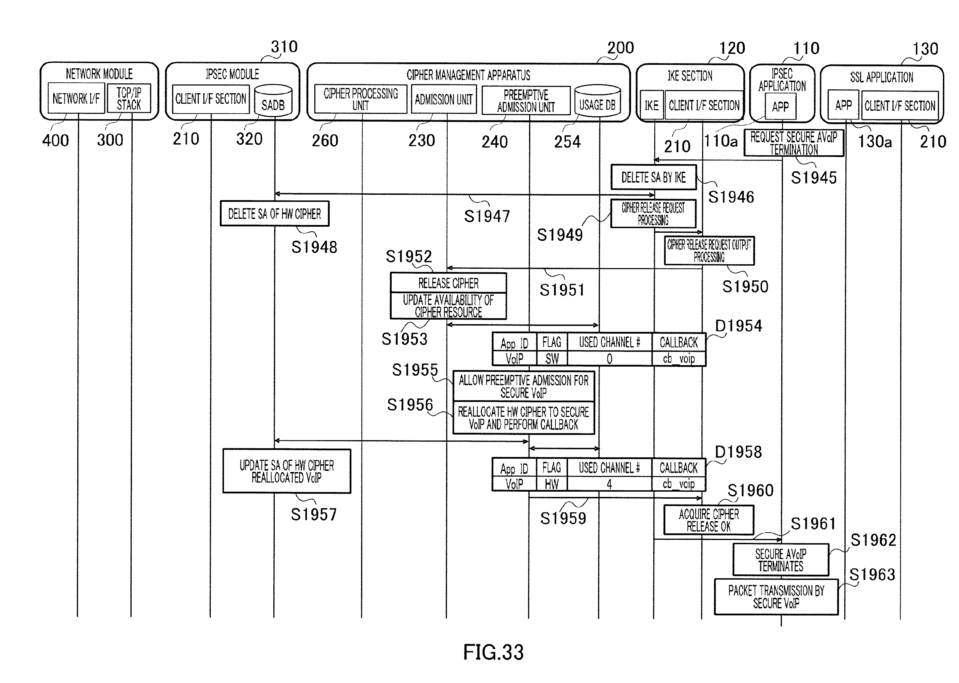

When cryptographic operations for secure AVoIP terminates in portable terminal 100, in step S1945 in FIG.33, secure AVoIP 110a of IPsec application 110 performs secure AVoIP termination request processing and outputs a secure AVoIP termination request to IKE 120a.

In step S1946, IKE section 120 performs deletion processing of the SA held by IKE 120a, and, in step S1947, outputs deletion command information for deleting the SA, to SADB 320 via client I/F section 219.

In step S1948, SADB 320 of IPsec module 310 deletes the registered SA by the HW cipher.

In step S1949, IKE 120a performs cipher release request processing and outputs information with its indication to client I/F section 210.

In step S1950, client I/F section 210 acquires a cipher release request, and, in step S1951, the acquired cipher release request is outputted by IKE section 120 from client I/F section 210 to admission unit 230.

In step S1952, admission unit 230 that receives as input the cipher release request releases the cipher unit performing cryptographic operations for secure AVoIP.

In step S1953, admission unit 230 updates the availability of cipher resources by storing information about the released cipher unit in usage DB 254.

Table D1954 as updated usage DB 254 describes the fact that secure AVoIP processed by the HW cipher is deleted from the state of table D1935 shown in FIG.31 and secure VoIP is processed by the SW cipher.

As described above, when secure VoIP is processed by the SW cipher and processing by the HW cipher is not performed, in step S1955, preemptive admission unit 240 admits secure VoIP as the preemptive admission target.

In step S1956, preemptive admission unit 240 reallocates the HW cipher to secure VoIP, invokes cb_voip and outputs it to SADB 320 to update the SA.

In step S1957, SADB 320 updates the registered SA into an SA of secure VoIP allocated the HW cipher.

In this case, usage DB 254 is rewritten, and table D1958 describes the fact that secure VoIP is processed by the HW cipher and four HW channels are used.

In step S1959, preemptive admission unit 240 that reallocated the HW cipher to secure VoIP outputs information with its indication to client I/F section 210 of IKE section 120.

In step S1960, IKE section 120 acknowledges that the cipher release is okayed in client I/F section 210, and, in step S1961, outputs information with its indication from IKE 120a to secure AVoIP 110a which is an IPsec application.

In step S1962, secure AVoIP 110a of IPsec application 110 finds the termination of secure AVoIP.

In step S1963, secure VoIP transmits VoIP packets. The processing in this step S1919 is the same as in step S1301 in FIG.11, and, afterwards, the processing shown in FIG.11 are performed to perform VoIP transmission by the HW cipher.

Next, in step S1659 shown in FIG.18, secure Web 130a of SSL application 130 performs secure VoIP termination request processing and outputs a secure VoIP termination request to IKE 120a.

In step S1965, IKE section 120 performs deletion processing of the SA held by IKE 120a, and, in step S1966, outputs deletion command information for deleting the SA, to SADB 320.

In step S1967, SADB 320 of IPsec module 310 deletes the registered SA by the HW cipher.

In step S1968, IKE 120a performs cipher release request processing and outputs information with its indication to client I/F section 210.

In step S1969, client I/F section 210 acquires a cipher release request, and, in step S1970, the acquired cipher release request is outputted by IKE section 120 from client I/F section 210 to admission unit 230.

In step S1971, admission unit 230 that receives as input the cipher release request releases the cipher unit performing cryptographic operations for secure VoIP.

In step S1972, admission unit 230 updates the availability of cipher resources by storing information about the released cipher unit in usage DB 254.

Table D1973 as updated usage DB 254 does not store any secure applications that are allocated the HW cipher.

Consequently, in step S1974, there is no application targeted for HW encryption and SW encryption in usage DB 254, and therefore the preemptive admission control fails.

In step S1975, information with its indication is outputted to client I/F section 210.

In step S1976, IKE section 120 acknowledges that the cipher release is okayed in client I/F section 210, and, in step S1977, outputs information with its indication from IKE 120a to secure VoIP 110b which is an IPsec application.

In step S1978, secure VoIP 110b of IPsec application 110 finds the termination of secure VoIP.

As described above, according to the portable terminal of the present embodiment, upon utilizing at the same time services by a plurality of secure applications requiring cryptographic operations such as encryption and decryption, cipher management apparatus 200 can adopt management such that HW cipher unit 264 that performs fast cryptographic operation processing performs cryptographic operations preferentially for secure applications requiring high real-time performance such as AVoIP and VoIP.

That is, while performing cryptographic operations of a secure application requiring low real-time performance such as Web, if a request is detected using policy DB 244 from an application requiring high real-time performance and having a high priority level of encryption and decryption processing such as VoIP and AVoIP, cipher management apparatus 200 revokes the cipher resources in HW cipher unit 264 and allocates these cipher resources preferentially to the application requiring high real-time performance. Further, processing of the application, from which the cipher resources are revoked, is continued in SW cipher processing unit 266. By this means, it is possible to reduce delay of a secure application requiring high real-time performance.

Further, by managing available cipher resources in HW cipher unit 264 using usage DB 254, if usage resource information acquiring section 252 detects the available cipher resources in HW cipher unit 264, an application processed in SW cipher unit 266 is reallocated to HW cipher engine processing.

Further, although a case has been described with the above-described embodiments where cryptographic operation processing by cipher management apparatus (cipher apparatus) 200 of the present embodiments is mainly encryption processing, it is equally possible to adopt decryption processing as the cryptographic operation processing.

Therefore, in a case where there are packets of multiple applications, it is possible to reduce delay of a cryptographic operation time for an application requiring low real-time performance while preferentially processing packets having a high priority level of encryption and decryption processing.

The cipher management apparatus (cipher apparatus) according to the present invention are not limited to the above-described embodiments and can be implemented with various changes.

For example, by describing the cryptographic operation method according to the present invention in a programming language, storing this program in a memory and making the information processing section execute this program, it is possible to implement the same function as in the cipher apparatus of the present invention.

The disclosure of Japanese Patent Application No.2007-160630, filed on June 18, 2007, including the specification, drawings and abstract, is incorporated herein by reference in its entirety.

### Industrial Applicability

The cipher apparatus and cryptographic operation method according to the present invention has an advantage of reducing packet processing delay of a secure application requiring real-time performance, and is useful to portable terminals for Web access and AVoIP and VoIP packet communication.

## Claims

1. A cipher apparatus having a hardware module and software module for performing a cryptographic operation for a secure application that is allocated, the cipher apparatus comprising:
a determining section that determines an availability of the hardware module for a secure application that requests the cryptographic operation;
a priority calculating section that calculates a priority of the cryptographic operation for the secure application that requests the cryptographic operation;
a comparing section that, if the availability of the hardware module is not admitted, compares priorities between the secure application requesting the cryptographic operation and another secure application that is different from the secure application that requests the cryptographic operation and that is allocated to the hardware module; and
an allocating section that, when a priority level of the secure application that requests the cryptographic operation is higher, releases the another secure application from the hardware module, allocates the secure application that requests the cryptographic operation to the hardware module, and allocates the released another secure application to the software module.

2. The cipher apparatus according to claim 1, wherein the priority calculating section calculates the priority of the secure application that requests the cryptographic operation, using priority information table in which priorities of a plurality of secure applications in the cryptographic operations are set.

3. The cipher apparatus according to claim 1, further comprising a usage state management table that manages secure applications for which the cryptographic operation is performed by the hardware module and the software module,
wherein, upon receiving a request for the cryptographic operation from a secure application, the determining section determines the availability of the hardware module using the usage information management table.

4. The cipher apparatus according to claim 1, wherein, when the amount of available cipher resources in the hardware module is equal to or greater than the amount of cipher resources required for the cryptographic operation of the secure application that requests the cryptographic operation, the determining section determines that the availability is admitted.

5. The cipher apparatus according to claim 2, wherein the priorities in the priority information table are determined by a limited delay time of each application, and a secure application for which a delay time is severely limited is made a secure application having a high priority.

6. The cipher apparatus according to claim 1, wherein the priorities in the priority information table are determined by bandwidth requirements used in the applications, and a secure application having broad bandwidth requirements is made a secure application having a high priority.

7. The cipher apparatus according to claim 1, wherein, when the cryptographic operation for the secure application allocated to the hardware module terminates, the allocating section releases the secure application allocated to the hardware module and allocates the another secure application allocated to the software module, to the hardware module to perform the cryptographic operation.

8. A cryptographic operation method for performing a cryptographic operation by allocating a hardware module and software module to a secure application that requests the cryptographic operation, the method comprising:
a determining step of determining an availability of the hardware module for a secure application that requests the cryptographic operation;
a priority calculating step of calculating a priority of a cryptographic operation for the secure application that requests the cryptographic operation;
a comparing step of, when the availability of the hardware module is not admitted, comparing priorities between the secure application that requests the cryptographic operation and another secure application from the secure application that requests the cryptographic operation and that is allocated to the hardware module; and
an allocating step of, when a priority level of the secure application that requests the cryptographic operation is higher, releasing the another secure application from the hardware module, allocating the secure application that requests the cryptographic operation to the hardware module, and allocating the another secure application released to the software module.

9. The cryptographic operation method according to claim 8, wherein, when the cryptographic operation for the secure application allocated to the hardware module terminates, the allocating step comprises releasing the secure application allocated to the hardware module and reallocating the another secure application allocated to the software module, to the hardware module to perform the cryptographic operation.
